# EUROPÄISCHE PATENTSCHRIFT

(11) **EP 4 540 055 B1**
(45) Veröffentlichungstag und Bekanntmachung des Hinweises auf die Patenterteilung: **28.10.2026**
(21) Anmeldenummer: 23732978.4
(22) Anmeldetag: 16.06.2023
(51) Int. Cl.: B32B 5/02, B32B 5/26, D04H 3/007

(54) **SPINNVLIESLAMINAT UND VERFAHREN ZUR HERSTELLUNG EINES SPINNVLIESLAMINATES**
SPUNBONDED NONWOVEN LAMINATE AND PROCESS FOR PRODUCING A SPUNBONDED NONWOVEN LAMINATE
STRATIFIÉ NON TISSÉ FILÉ-LIÉ ET PROCESSUS DE PRODUCTION D'UN STRATIFIÉ NON TISSÉ FILÉ-LIÉ

(30) Priorität: 17.06.2022 DE 102022115200
(43) Veröffentlichungstag der Anmeldung: 23.04.2025
(73) Patentinhaber: Reifenhäuser GmbH & Co. KG Maschinenfabrik, 53844 Troisdorf (DE)
(72) Erfinder: BOHL, Patrick, 53773 Hennef (DE); RÖSNER, Andreas, 53115 Bonn (DE); WAGNER, Tobias, 50679 Köln (DE)
(74) Vertreter: Andrejewski - Honke Patent- und Rechtsanwälte Partnerschaft mbB
(86) Internationale Anmeldenummer: PCT/EP2023/066323
(87) Internationale Veröffentlichungsnummer: WO 2023/242428

(56) Entgegenhaltungen:
- DE-B3- 102021 102 287
- US-A1- 2016 221 300
- US-A1- 2019 161 897
- US-A1- 2019 233 994
- US-A1- 2020 307 146
- US-A1- 2021 031 487
- US-A1- 2021 355 614

## Beschreibung

Die Erfindung betrifft ein Spinnvlieslaminat mit zumindest zwei Spinnvlieslagen aus Endlosfilamenten, wobei zumindest eine Crimp-Spinnvlieslage vorhanden ist, die gekräuselte Endlosfilamente aufweist, insbesondere aus gekräuselten Endlosfilamenten besteht bzw. im Wesentlichen besteht, wobei die gekräuselten Endlosfilamente der zumindest einen Crimp-Spinnvlieslage Mehrkomponentenfilamente, insbesondere Bikomponentenfilamente sind. Gegenstand der Erfindung ist weiterhin ein Verfahren zur Herstellung eines Spinnvlieslaminates mit zumindest zwei Spinnvlieslagen aus Endlosfilamenten. - Bei den Endlosfilamenten der zumindest zwei Spinnvlieslagen des erfindungsgemäßen Spinnvlieslaminates handelt es sich bevorzugt um Endlosfilamente aus thermoplastischem Kunststoff. Endlosfilamente unterscheiden sich aufgrund ihrer quasi endlosen Länge von Kurzfasern, die deutlich geringere Längen von beispielsweise 1 mm bis 60 mm aufweisen.

Spinnvlieslaminate und Verfahren zur Herstellung von Spinnvlieslaminaten sind aus der Praxis und aus dem Stand der Technik in unterschiedlichen Ausführungsformen grundsätzlich bekannt. DE 10 2021 102 287 B3 offenbart ein Spinnvlieslaminat und ein Herstellungsverfahren. US 2016/0221300 A1 betrifft ebenfalls ein Spinnvlieslaminat. US 2019/0233994 A1 beschreibt ein Verfahren zur Herstellung von Spinnvlieslaminaten und ein entsprechendes Laminat. Bei Spinnvliesen bzw. Spinnvlieslaminaten ist für die spätere Anwendung, beispielsweise im Hygienebereich, regelmäßig eine zufriedenstellende Drapierbarkeit gewünscht. Gut drapierbare Spinnvlieslaminate sind allerdings zumeist auch mechanisch wenig stabil und können insbesondere größeren Zugkräften, die auf die Spinnvlieslaminate wirken, oftmals nicht in ausreichendem Maße widerstehen. Das ist nachteilhaft und daher ist es für Spinnvlieslaminate ebenso gewünscht, dass diese mechanisch stabil sind und insbesondere eine ausreichende Längssteifigkeit aufweisen, die auch die Maschinengängigkeit der Spinnvlieslaminate sicherstellt. Insoweit besteht bei den aus der Praxis bekannten Spinnvliesaminaten ein Zielkonflikt zwischen einer zufriedenstellenden Drapierbarkeit und einer ausreichenden mechanischen Stabilität, insbesondere einer ausreichenden Längssteifigkeit. Es ist in diesem Zusammenhang bekannt, mehrlagige Spinnvlieslaminate vorzusehen, deren einzelne Lagen unterschiedliche Eigenschaften - beispielsweise im Hinblick auf die Weichheit und die Festigkeit - aufweisen, sodass verschiedene Zielparameter der Spinnvlieslaminate durch die Eigenschaften der einzelnen Lagen eingestellt werden können. Solche Spinnvlieslaminate haben sich grundsätzlich bewährt. Allerdings hat sich bei diesen aus der Praxis bekannten Maßnahmen gezeigt, dass die Abriebfestigkeit der Spinnvlieslaminate häufig zu wünschen übrig lässt. Bei den bekannten Spinnvlieslaminaten wurden insbesondere unerwünschte Delaminationsvorgänge beobachtet. Außerdem konnte bisher kein optimaler Kompromiss zwischen der Drapierbarkeit und der mechanischen Stabilität der Spinnvlieslaminate erreicht werden. Insoweit besteht Verbesserungsbedarf. - Hier setzt die Erfindung ein.

Der Erfindung liegt das technische Problem zugrunde, ein Spinnvlieslaminat der eingangs genannten Art anzugeben, bei dem ein optimaler Kompromiss aus einer zufriedenstellenden Drapierbarkeit und einer ausreichenden mechanischen Stabilität, insbesondere einer vorteilhaften Längssteifigkeit, erreicht wird und bei dem nichtsdestoweniger unerwünschte Delaminationsvorgänge vermieden werden können und das sich insoweit bevorzugt auch durch eine vorteilhafte Abriebfestigkeit auszeichnet. Der Erfindung liegt weiterhin das technische Problem zugrunde, ein Verfahren zur Herstellung eines solchen Spinnvlieslaminates anzugeben.

Zur Lösung des technischen Problems lehrt die Erfindung ein Spinnvlieslaminat gemäß Patentanspruch 1.

Gemäß sehr bevorzugter Ausführungsform weist das erfindungsgemäße Laminat eine maximale Biegesteifigkeit mit einem Cantilever von maximal 65 mm, bevorzugt von maximal 55 mm, besonders bevorzugt von maximal 50 mm, ganz besonders bevorzugt von maximal 45 mm, auf. Wenn hier und nachfolgend von Cantilever die Rede ist, meint dies vorzugsweise den Cantilever in MD-Richtung und/oder in CD-Richtung des Spinnvlieslaminates, bevorzugt zumindest den Cantilever in MD-Richtung des Spinnvlieslaminates. Maschinenrichtung (MD) meint im Rahmen der Erfindung insbesondere die Förderrichtung F des Spinnvlieslaminates auf einer Ablageeinrichtung. Demgegenüber meint CD bzw. CD-Richtung die Richtung quer zur Maschinenrichtung.

Die Biegesteifigkeit des Spinnvlieslaminates wird im Rahmen der Erfindung nach der Methode "WSP 90.1(05) Standard Test Method for Stiffness of Nonwoven: Fabrics Using the Cantilever Test" ermittelt. - Im Rahmen der Erfindung wird im Übrigen zwischen der Biegesteifigkeit einerseits und der Längssteifigkeit des Spinnvlieslaminates andererseits unterschieden. Die Biegesteifigkeit ist insbesondere ein Maß für die Drapierbarkeit des Spinnvlieslaminates, während demgegenüber die Längssteifigkeit insbesondere ein Maß für die mechanische Stabilität und vorzugsweise die Maschinengängigkeit des Spinnvlieslaminates ist. Längssteifigkeit meint im Rahmen der Erfindung insbesondere die Steifigkeit des Spinnvlieslaminates in Maschinenrichtung (MD).

Der Ausdruck Spinnvlieslaminat meint im Rahmen der Erfindung insbesondere einen Vliesstoff, der als Laminat mit zumindest zwei Spinnvlieslagen ausgebildet ist. Hier und nachfolgend wird anstelle des Begriffes Spinnvlieslaminat auch einfach der Begriff Laminat verwendet. Laminat bzw. Spinnvlieslaminat meint außerdem insbesondere das fertig behandelte, vorzugsweise vorverfestigte und/oder endverfestigte, Laminat.

Empfohlenermaßen werden als Endlosfilamente für die zumindest eine Crimp-Spinnvlieslage Endlosfilamente mit natürlicher Kräuselung bzw. mit latenter Kräuselneigung eingesetzt. Vorzugsweise weist die zumindest eine Crimp-Spinnvlieslage mindestens 90 Gew.-%, bevorzugt mindestens 95 Gew.-%, ganz besonders bevorzugt mindestens 98 Gew.-% gekräuselte Endlosfilamente auf. Ganz besonders bevorzugt besteht die zumindest eine Crimp-Spinnvlieslage aus gekräuselten Endlosfilamenten bzw. besteht im Wesentlichen aus gekräuselten Endlosfilamenten. Zweckmäßigerweise wird die natürliche Kräuselung bzw. latente Kräuselneigung durch die Wahl der Rohstoffe und/oder der Prozesseinstellungen hervorgerufen. Bevorzugt wird dazu zumindest eine erste niedrigschmelzende Kunststoffkomponente und zumindest eine (im Vergleich dazu) zweite höherschmelzende Kunststoffkomponente für die Endlosfilamente der zumindest einen Crimp-Spinnvlieslage eingesetzt. Höherschmelzend und niedrigschmelzend bezieht sich dabei im Rahmen der Erfindung insbesondere auf die Schmelztemperatur der Kunststoffkomponenten. Grundsätzlich können die erste und die zweite Kunststoffkomponente der Endlosfilamente der zumindest einen Crimp-Spinnvlieslage aber auch die gleiche Schmelztemperatur aufweisen und dann kann eine Kräuselung bzw. Kräuselneigung auch durch andere voneinander verschiedene Eigenschaften der Kunststoffkomponenten realisiert werden.

Erfindungsgemäß besteht die zumindest eine Armierungs-Spinnvlieslage aus nicht-gekräuselten Endlosfilamenten und/oder aus im Vergleich zu den Endlosfilamenten der zumindest einen Crimp-Spinnvlieslage weniger gekräuselten Endlosfilamenten bzw. besteht im Wesentlichen aus solchen Endlosfilamenten. Im Rahmen der Erfindung ist die zumindest eine Armierungs-Spinnvlieslage insbesondere für die mechanische Stabilität bzw. die Längssteifigkeit des Spinnvlieslaminates verantwortlich und die Ausgestaltung der Endlosfilamente der zumindest einen Armierungs-Spinnvlieslage trägt außerdem bevorzugt zu einer vorteilhaften Abriebfestigkeit und zur Vermeidung von Delaminationsvorgängen in dem erfindungsgemäßen Spinnvlieslaminat bei. Dass die Endlosfilamente der zumindest einen Armierungs-Spinnvlieslage aus im Vergleich zu den Endlosfilamenten der zumindest einen Crimp-Spinnvlieslage weniger gekräuselten Endlosfilamenten bestehen bzw. im Wesentlichen bestehen, meint im Rahmen der Erfindung insbesondere, dass der Kräuselungsgrad der Endlosfilamente der zumindest einen Armierungs-Spinnvlieslage geringer ist als der Kräuselungsgrad der Endlosfilamente der zumindest einen Crimp-Spinnvlieslage.

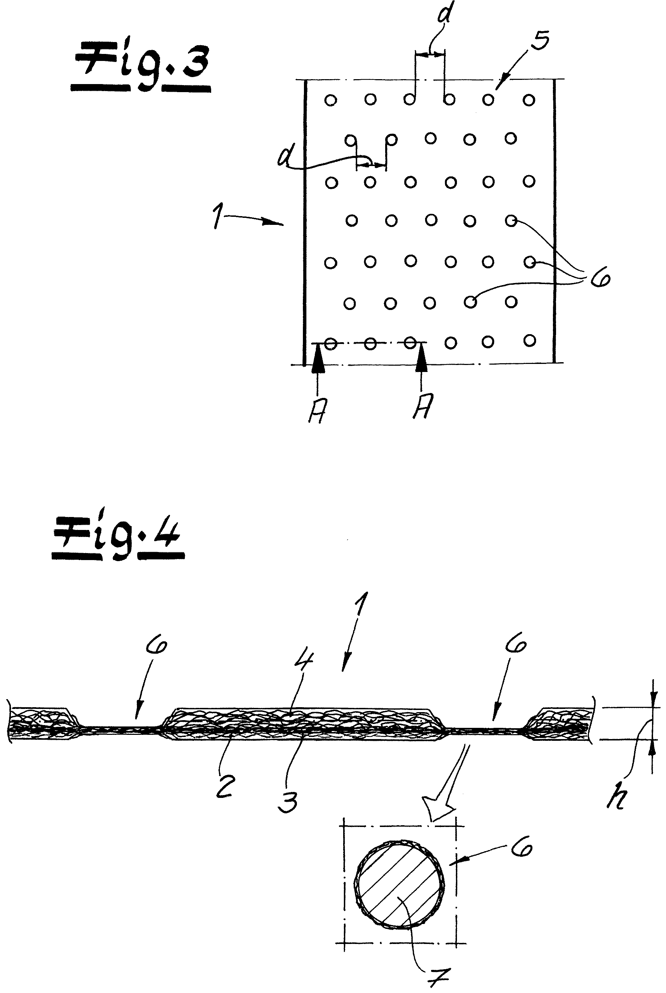

Dass der Kräuselungsgrad der Endlosfilamente einer Spinnvlieslage geringer ist als der Kräuselungsgrad der Endlosfilamente einer anderen Spinnvlieslage meint dabei insbesondere, dass die Endlosfilamente weniger Kräuselungen bzw. Bögen pro Zentimeter Filamentlänge (Bogenanzahl) und/oder einen größeren Kräuselungsdurchmesser bzw. Bogendurchmesser aufweisen als die Endlosfilamente der anderen Spinnvlieslage. Die Anzahl der Kräuselschlingen bzw. Kräuselbögen pro Zentimeter Länge der Filamente wird dabei insbesondere nach der japanischen Norm JIS L-1015-1981 gemessen, indem die Kräuselungen unter einer Vorspannung von 2 mg/den in (1/10 mm) gezählt werden, wobei die Länge der gekräuselten Filamente unter Vorspannung zugrunde liegt. Es wird eine Empfindlichkeit von 0,05 mm verwendet, um die Schlingenanzahl bzw. Anzahl der Kräuselbögen zu bestimmen. Die Messung wird zweckmäßigerweise durchgeführt mit einem "Favimat"-Gerät der Firma TexTechno, Deutschland. Dazu wird auf die Veröffentlichung "Automatic Crimp Measurement on Staple Fibres", Denkendorf Kolloquium, "Textile Mess- und Prüftechnik", 9.11.99, Dr. Ulrich Mörschel (insbesondere Seite 4, Fig. 4) verwiesen. Die Filamente (bzw. die Filamentprobe) werden/wird hierzu als Filamentknäuel vor einer weiteren Verfestigung von der Ablage bzw. vom Ablageband abgenommen und die Filamente werden vereinzelt und gemessen.

Der Bogendurchmesser wird zweckmäßigerweise gemessen, indem der zu vermessende Vliesstoff unter einem Mikroskop platziert und unter Verwendung einer geeigneten Vergrößerung ein Standbild erzeugt wird und darin kann der Bogendurchmesser gemessen werden. Bei Vliesaggregaten bzw. Vlieslaminaten mit mehreren Lagen bzw. Schichten muss das optische System jeweils auf die Oberfläche jeder sichtbaren Lage bzw. Schicht fokussiert werden, sodass die weiteren Oberflächen bzw. Lagen oder Schichten soweit wie möglich außerhalb der Tiefenschärfe liegen. Aufgrund der zufälligen Verteilung der Filamente bzw. der zufälligen Verteilung der Bogendurchmesser sind jeweils mindestens 25 Messungen erforderlich. Es wird der arithmetische Mittelwert angegeben.

Erfindungsgemäß weisen die Endlosfilamente der zumindest einen Armierungs-Spinnvlieslage zumindest eine, insbesondere eine bzw. lediglich eine, an ihrer Oberfläche angeordnete Bindekomponente auf. Die Endlosfilamente der zumindest einen Crimp-Spinnvlieslage weisen erfindungsgemäß zumindest eine erste, vorzugsweise niedrigschmelzende, Kunststoffkomponente auf. Im Rahmen der Erfindung wird zweckmäßigerweise eine Verbindung zwischen der zumindest einen Armierungs-Spinnvlieslage und der zumindest einen Crimp-Spinnvlieslage und insbesondere zwischen der Bindekomponente der Endlosfilamente der Armierungs-Spinnvlieslage und zumindest der ersten, vorzugsweise niedrigschmelzenden, Kunststoffkomponente der zumindest einen Crimp-Spinnvlieslage realisiert. Das kann insbesondere durch Verfestigungsmaßnahmen bzw. durch die Einwirkung von Druck und/oder Temperatur erfolgen.

Die Schmelztemperaturdifferenz zwischen der Bindekomponente der Endlosfilamente der Armierungs-Spinnvlieslage und der ersten, vorzugsweise niedrigschmelzenden, Komponente der Endlosfilamente der zumindest einen Crimp-Spinnvlieslage beträgt erfindungsgemäß weniger als 15 °C. Die Schmelztemperatur der Komponenten der Endlosfilamente, insbesondere der verwendeten Materialien bzw. Kunststoffe, wird im Rahmen der Erfindung mittels dynamischer Differenzkalorimetrie (DSC) nach ISO 11357-3:2011 gemessen. Wenn die Schmelztemperaturdifferenz zwischen der Bindekomponente der Endlosfilamente der Armierungs-Spinnvlieslage und der ersten, vorzugsweise niedrigschmelzenden, Komponente der Endlosfilamente der Crimp-Spinnvlieslage gemäß bevorzugter Ausführungsform 0 °C bzw. etwa 0 °C beträgt, meint dies insbesondere, dass die beiden Komponenten die gleiche Schmelztemperatur bzw. im Wesentlichen die gleiche Schmelztemperatur aufweisen. Das kann durch zwei verschiedene Komponenten bzw. Materialien realisiert sein, die die gleiche Schmelztemperatur aufweisen oder auch dadurch, dass das Material der ersten, vorzugsweise niedrigschmelzenden, Kunststoffkomponente der Endlosfilamente der zumindest einen Crimp-Spinnvlieslage dem Material der Bindekomponente der Endlosfilamente der Armierungs-Spinnvlieslage entspricht. Gemäß einer bevorzugten Ausführungsform entspricht somit die Bindekomponente der Endlosfilamente der Armierungs-Spinnvlieslage der ersten, vorzugsweise niedrigschmelzenden, Kunststoffkomponente der Endlosfilamente der zumindest einen Crimp-Spinnvlieslage hinsichtlich des verwendeten Materials bzw. Kunststoffes. Es liegt im Rahmen der Erfindung, dass die Schmelztemperatur der Bindekomponente der Endlosfilamente der Armierungs-Spinnvlieslage höher oder niedriger ist als die Schmelztemperatur der ersten, vorzugsweise niedrigschmelzenden, Kunststoffkomponente der Endlosfilamente der zumindest einen Crimp-Spinnvlieslage.

Das erfindungsgemäße Spinnvlieslaminat zeichnet sich durch eine zufriedenstellende Drapierbarkeit, insbesondere aufgrund der vorteilhaft geringen Biegesteifigkeit, aus und weist nichtsdestoweniger eine ausreichende mechanische Stabilität, insbesondere eine ausreichende Längssteifigkeit, auf. Darüber hinaus können die in der Praxis häufig beobachteten Delaminationsvorgänge bei dem erfindungsgemäßen Spinnvlieslaminat vermieden werden, sodass das Laminat insbesondere auch eine sehr vorteilhafte Abriebfestigkeit aufweist. Durch die spezielle Wahl der Komponenten bzw. Kunststoffkomponenten der zumindest einen Crimp-Spinnvlieslage und der zumindest einen Armierungs-Spinnvlieslage werden die Bindungseigenschaften zwischen den einzelnen Spinnvlieslagen des Spinnvlieslaminates verbessert, sodass Delaminationsvorgänge deutlich reduziert werden können.

Eine bevorzugte Ausführungsform des erfindungsgemäßen Spinnvlieslaminates ist dadurch gekennzeichnet, dass die Endlosfilamente der zumindest einen Armierungs-Spinnvlieslage Monokomponentenfilamente sind, die aus der Bindekomponente bestehen bzw. im Wesentlichen bestehen. Dass die Endlosfilamente bzw. Monokomponentenfilamente aus der Bindekomponente bestehen bzw. im Wesentlichen bestehen, meint im Rahmen der Erfindung insbesondere, dass die Endlosfilamente der zumindest einen Armierungs-Spinnvlieslage lediglich die Bindekomponente aufweisen und ganz besonders bevorzugt lediglich einen (ersten) Kunststoff als Bindekomponente aufweisen bzw. aus lediglich einem (ersten) Kunststoff bestehen bzw. im Wesentlichen bestehen. Das wird weiter unten noch näher erläutert.

Gemäß einer alternativen bevorzugten Ausführungsform des erfindungsgemäßen Spinnvlieslaminates sind die Endlosfilamente der zumindest einen Armierungs-Spinnvlieslage Mehrkomponentenfilamente, insbesondere Bikomponentenfilamente, bevorzugt Mehrkomponentenfilamente bzw. Bikomponentenfilamente mit Kern-Mantel-Konfiguration, besonders bevorzugt Mehrkomponentenfilamente bzw. Bikomponentenfilamente mit zentrischer bzw. symmetrischer Kern-Mantel-Konfiguration und/oder mit exzentrischer Kern-Mantel-Konfiguration und ganz besonders bevorzugt bildet die zumindest eine Bindekomponente der Endlosfilamente der Armierungs-Spinnvlieslage die Mantelkomponente der Endlosfilamente mit Kern-Mantel-Konfiguration. Es liegt außerdem im Rahmen der Erfindung, dass die als Mehrkomponentenfilamente bzw. Bikomponentenfilamente ausgebildeten Endlosfilamente der zumindest einen Armierungs-Spinnvlieslage eine andere symmetrische Querschnittskonfiguration aufweisen, beispielsweise eine trilobale Konfiguration oder eine Mono-Typ-Konfiguration und dergleichen. Dass die zumindest eine Bindekomponente erfindungsgemäß an der Oberfläche der Endlosfilamente der Armierungs-Spinnvlieslage angeordnet ist meint im Übrigen insbesondere, dass die Bindekomponente zumindest an der Oberfläche dieser Endlosfilamente angeordnet ist, wie etwa im Falle der oben stehend beschriebenen Monokomponentenfilamente oder im Falle der vorstehend beschriebenen Filamente mit Kern-Mantel-Konfiguration, bei denen die Bindekomponente vorzugsweise die Mantelkomponente bildet.

Wenn die Endlosfilamente der zumindest einen Armierungs-Spinnvlieslage als Mehrkomponentenfilamente bzw. Bikomponentenfilamente mit Kern-Mantel-Konfiguration ausgebildet sind, liegt es im Rahmen der Erfindung, dass das Massenverhältnis Kern zu Mantel der Endlosfilamente der Armierungs-Spinnvlieslage mit Kern-Mantel-Konfiguration 50:50 bis 95:5, vorzugsweise 55:45 bis 85:15, bevorzugt 60:40 bis 80:20 beträgt. Dieser Ausführungsform liegt insbesondere die Erkenntnis zugrunde, dass mit diesen Massenverhältnissen ein besonders guter Kompromiss zwischen der Längssteifigkeit des resultierenden Spinnvlieslaminates und der Abriebfestigkeit bzw. der Vermeidung von Delaminationsvorgängen erreicht werden kann.

Erfindungsgemäß ist die Schmelztemperatur der Bindekomponente der Endlosfilamente der Armierungs-Spinnvlieslage niedriger als die Schmelztemperatur der zweiten, vorzugsweise höherschmelzenden, Kunststoffkomponente der Endlosfilamente der zumindest einen Crimp-Spinnvlieslage und wobei die Schmelztemperaturdifferenz zwischen der zweiten, vorzugsweise höherschmelzenden, Kunststoffkomponente der Endlosfilamente der zumindest einen Crimp-Spinnvlieslage und der Bindekomponente der Endlosfilamente der zumindest einen Armierungs-Spinnvlieslage vorzugsweise zumindest 2 °C, bevorzugt zumindest 5 °C, besonders bevorzugt zumindest 7 °C beträgt.

Für den Fall, dass die erste und die zweite Kunststoffkomponente der Endlosfilamente der zumindest einen Crimp-Spinnvlieslage die gleiche Schmelztemperatur aufweisen, wird zweckmäßigerweise diese Schmelztemperatur zur Ermittlung der Schmelztemperaturdifferenz zwischen der zweiten Kunststoffkomponente der Endlosfilamente der zumindest einen Crimp-Spinnvlieslage und der Bindekomponente der Endlosfilamente der zumindest einen Armierungs-Spinnvlieslage zugrunde gelegt. Dieser bevorzugten Ausführungsform, bei der die Schmelztemperatur der Bindekomponente der Endlosfilamente der Armierungs-Spinnvlieslage niedriger ist als die Schmelztemperatur der zweiten, vorzugsweise höherschmelzenden, Kunststoffkomponente der Endlosfilamente der zumindest einen Crimp-Spinnvlieslage liegt die Erkenntnis zugrunde, dass die Endlosfilamente der Armierungs-Spinnvlieslage dann sehr gute Bindungseigenschaften gegenüber den Endlosfilamenten der zumindest einen Crimp-Spinnvlieslage aufweisen. Delaminationen zwischen der Armierungs-Spinnvlieslage und der zumindest einen Crimp-Spinnvlieslage können auf diese Weise weiter verringert werden und insoweit weist das resultierende Spinnvlieslaminat auch eine sehr zufriedenstellende Abriebfestigkeit auf.

Eine besonders bevorzugte Ausführungsform des erfindungsgemäßen Spinnvlieslaminates ist dadurch gekennzeichnet, dass die Endlosfilamente der zumindest einen Armierungs-Spinnvlieslage stärker in Maschinenrichtung (MD) orientiert sind als die Endlosfilamente der zumindest einen Crimp-Spinnvlieslage. Dieser Ausführungsform liegt insbesondere die Erkenntnis zugrunde, dass die zumindest eine Armierungs-Spinnvlieslage dann eine besonders vorteilhafte Längssteifigkeit aufweist. Bevorzugt weist die zumindest eine Armierungs-Spinnvlieslage eine höhere Längssteifigkeit auf als die zumindest eine Crimp-Spinnvlieslage. Die Orientierung der Endlosfilamente der Armierungs-Spinnvlieslage und/oder der Endlosfilamente der zumindest einen Crimp-Spinnvlieslage in Maschinenrichtung (MD) kann im Rahmen der Erfindung insbesondere mittels Mikro-Computertomografie (µCT), vorzugsweise wie beschrieben in WO 2020/103964 A1, insbesondere auf den Seiten 50 bis 53, "Method to determine geometric fiber statistics for a nonwoven", ermittelt werden.

Es ist sehr bevorzugt, dass der Titer der Endlosfilamente der zumindest einen Armierungs-Spinnvlieslage weniger als 2,5 den, insbesondere weniger als 1,7 den, vorzugsweise weniger als 1,5 den, bevorzugt 1,0 den bis 1,4 den, besonders bevorzugt 1,2 den bis 1,4 den beträgt und/oder dass der Titer der Endlosfilamente der zumindest einen Crimp-Spinnvlieslage weniger als 3,0 den, vorzugsweise weniger als 2,0 den, bevorzugt weniger als 1,7 den, besonders bevorzugt 1,0 den bis 1,6 den, ganz besonders bevorzugt 1,2 den bis 1,4 den beträgt. Es liegt im Rahmen der Erfindung, dass der Titer der Endlosfilamente der zumindest einen Armierungs-Spinnvlieslage geringer ist als der Titer der Endlosfilamente der zumindest einen Crimp-Spinnvlieslage.

Es ist bevorzugt, dass die zumindest eine Bindekomponente der Endlosfilamente der Armierungs-Spinnvlieslage einen ersten Kunststoff aufweist, insbesondere aus einem ersten Kunststoff besteht bzw. im Wesentlichen besteht, wobei der erste Kunststoff vorzugsweise ein Homo-Polyolefin - insbesondere ein Homo-Polypropylen und/oder ein Homo-Polyethylen - und/oder ein Polyolefin-Copolymer - insbesondere ein Polypropylen-Copolymer und/oder ein Polyethylen-Copolymer - ist. Wenn der erste Kunststoff ein Homo-Polypropylen ist, liegt es im Rahmen der Erfindung, dass es sich dabei um ein durch Metallocen-Katalyse polymerisiertes Polypropylen handelt. Wenn der erste Kunststoff ein Polypropylen-Copolymer ist, ist es bevorzugt, dass es sich dabei um ein Propylen-α-Olefin-Copolymer handelt. Es ist besonders bevorzugt, dass der erste Kunststoff ein Polypropylen-Copolymer und/oder ein Homo-Polypropylen, insbesondere ein durch Metallocen-Katalyse polymerisiertes Homo-Polypropylen, ist. - Wenn im Rahmen der Erfindung davon die Rede ist, dass eine Komponente aus einem Kunststoff besteht bzw. im Wesentlichen besteht, meint "im Wesentlichen besteht" insbesondere, dass die Komponente zu mindestens 90 Gew.-%, vorzugsweise zu mindestens 95 Gew.-% und bevorzugt zu mindestens 98 Gew.-% aus dem Kunststoff besteht und trägt insbesondere dem Umstand Rechnung, dass neben dem genannten Kunststoff auch noch Additive wie beispielsweise Weichmacher, Füllstoffe, Farben, Gleitmittel und dergleichen in geringem Umfang vorhanden sein können.

Eine weitere bevorzugte Ausführungsform der Erfindung ist dadurch gekennzeichnet, dass die zumindest eine Bindekomponente der Armierungs-Spinnvlieslage aus einer Mischung bzw. einem Blend aus zumindest einem ersten Kunststoff und zumindest einem zweiten Kunststoff besteht bzw. im Wesentlichen besteht und wobei bevorzugt der erste Kunststoff und/oder der zweite Kunststoff ein Homo-Polyolefin - insbesondere ein Homo-Polypropylen und/oder ein Homo-Polyethylen - und/oder ein Polyolefin-Copolymer - insbesondere ein Polypropylen-Copolymer und/oder ein Polyethylen-Copolymer - ist. Wenn der erste Kunststoff und/oder der zweite Kunststoff ein Homo-Polypropylen ist, liegt es im Rahmen der Erfindung, dass es sich dabei um ein durch Metallocen-Katalyse polymerisiertes Polypropylen handelt. Wenn der erste Kunststoff und/oder der zweite Kunststoff ein Polypropylen-Copolymer ist, ist es bevorzugt, dass es sich dabei um ein Propylen-α-Olefin-Copolymer handelt.

Gemäß einer bevorzugten Ausführungsform des erfindungsgemäßen Spinnvlieslaminates sind die Endlosfilamente der zumindest einen Armierungs-Spinnvlieslage als Bikomponentenfilamente mit Kern-Mantel-Konfiguration ausgebildet, wobei zweckmäßigerweise die zumindest eine, insbesondere die eine, Bindekomponente der Endlosfilamente der Armierungs-Spinnvlieslage die Mantelkomponente dieser Endlosfilamente mit Kern-Mantel-Konfiguration bildet. Zweckmäßigerweise besteht die die Mantelkomponente bildende Bindekomponente dann entsprechend den vorstehenden Angaben aus zumindest einem ersten Kunststoff oder aus einer Mischung bzw. einem Blend aus zumindest einem ersten Kunststoff und zumindest einem zweiten Kunststoff bzw. besteht im Wesentlichen daraus.

Eine bevorzugte Ausführungsform der Erfindung ist dadurch gekennzeichnet, dass die Kernkomponente der Endlosfilamente mit Kern-Mantel-Konfiguration der zumindest einen Armierungs-Spinnvlieslage zumindest ein Homo-Polyolefin - insbesondere zumindest ein Homo-Polypropylen und/oder zumindest ein Homo-Polyethylen - und/oder zumindest ein Polyolefin-Copolymer - insbesondere zumindest ein Polypropylen-Copolymer und/oder zumindest ein Polyethylen-Copolymer - ist. Wenn die Kernkomponente der Endlosfilamente mit Kern-Mantel-Konfiguration der zumindest einen Armierungs-Spinnvlieslage zumindest ein Homo-Polypropylen ist, liegt es im Rahmen der Erfindung, dass es sich dabei um ein durch Metallocen-Katalyse oder durch Ziegler-Natta-Katalyse polymerisiertes Polypropylen handelt. Wenn die Kernkomponente der Endlosfilamente mit Kern-Mantel-Konfiguration der Armierungs-Spinnvlieslage ein Polypropylen-Copolymer ist, ist es bevorzugt, dass es sich dabei um ein Propylen-α-Olefin-Copolymer handelt. Es ist außerdem bevorzugt, dass die Kernkomponente der Endlosfilamente mit Kern-Mantel-Konfiguration der Armierungs-Spinnvlieslage aus lediglich einem Kunststoff besteht bzw. im Wesentlichen besteht und dann handelt es sich zweckmäßigerweise bei dem Kunststoff um einen vorstehend angegebenen Kunststoff. Es ist aber grundsätzlich auch möglich, dass die Kernkomponente der Endlosfilamente mit Kern-Mantel-Konfiguration der Armierungs-Spinnvlieslage als Mischung bzw. Blend aus zumindest zwei Kunststoffen vorliegt. Es ist ganz besonders bevorzugt, dass die Kernkomponente der Endlosfilamente mit Kern-Mantel-Konfiguration der Armierungs-Spinnvlieslage zumindest ein Homo-Polypropylen ist, insbesondere aus zumindest einem Homo-Polypropylen besteht bzw. im Wesentlichen besteht. Bei dem Homo-Polypropylen handelt es sich vorzugsweise um ein durch Metallocen-Katalyse oder durch Ziegler-Natta-Katalyse polymerisiertes Polypropylen. Es liegt im Rahmen der Erfindung, dass sowohl der Kern als auch der Mantel der Endlosfilamente mit Kern-Mantel-Konfiguration der zumindest einen Armierungs-Spinnvlieslage aus einem Polyolefin-Copolymer, insbesondere aus einem Polypropylen-Copolymer, bestehen bzw. im Wesentlichen bestehen. Dann weist das Copolymer, das im Mantel eingesetzt wird vorzugsweise einen höheren Comonomer-Anteil auf als das Copolymer, das im Kern eingesetzt wird.

Eine besonders bevorzugte Ausführungsform des erfindungsgemäßen Spinnvlieslaminates ist dadurch gekennzeichnet, dass die erste, vorzugsweise niedrigschmelzende, und/oder die zweite, vorzugsweise höherschmelzende, Kunststoffkomponente der Endlosfilamente der zumindest einen Crimp-Spinnvlieslage zumindest ein Homo-Polyolefin - insbesondere zumindest ein Homo-Polypropylen und/oder zumindest ein Homo-Polyethylen - und/oder zumindest ein Polyolefin-Copolymer - insbesondere zumindest ein Polypropylen-Copolymer und/oder zumindest ein Polyethylen-Copolymer - ist. Es ist bevorzugt, dass die erste, vorzugsweise niedrigschmelzende, Kunststoffkomponente der Endlosfilamente der zumindest einen Crimp-Spinnvlieslage und/oder die zweite, vorzugsweise höherschmelzende, Kunststoffkomponente der Endlosfilamente der zumindest einen Crimp-Spinnvlieslage jeweils aus zumindest einem Kunststoff, insbesondere aus lediglich einem Kunststoff, bestehen bzw. im Wesentlichen bestehen und dass es sich bei diesem Kunststoff um einen der vorstehend angegebenen Kunststoffe handelt. Grundsätzlich liegt es aber auch im Rahmen der Erfindung, dass die erste, vorzugsweise niedrigschmelzende, Kunststoffkomponente der Endlosfilamente der zumindest einen Crimp-Spinnvlieslage und/oder die zweite, vorzugsweise höherschmelzende, Kunststoffkomponente der Endlosfilamente der zumindest einen Crimp-Spinnvlieslage als Mischung bzw. Blend von zumindest zwei Kunststoffen vorliegen. Wenn die erste und/oder die zweite Kunststoffkomponente der Endlosfilamente der zumindest einen Crimp-Spinnvlieslage zumindest ein Polypropylen-Copolymer ist, ist es bevorzugt, dass es sich dabei um zumindest ein Propylen-α-Olefin-Copolymer handelt. Wenn die erste und/oder die zweite Kunststoffkomponente der Endlosfilamente der zumindest einen Crimp-Spinnvlieslage zumindest ein Homo-Polypropylen ist, liegt es im Rahmen der Erfindung dass es sich dabei um zumindest ein durch Ziegler-Natta-Katalyse polymerisiertes Polypropylen handelt.

Eine ganz besonders bevorzugte Ausführungsform der Erfindung ist dadurch gekennzeichnet, dass die Bindekomponente der Endlosfilamente der Armierungs-Spinnvlieslage und/oder die erste, vorzugsweise niedrigschmelzende, Kunststoffkomponente der Endlosfilamente der zumindest einen Crimp-Spinnvlieslage und/oder die zweite, vorzugsweise höherschmelzende, Kunststoffkomponente der Endlosfilamente der zumindest einen Crimp-Spinnvlieslage jeweils auf Basis eines Polyolefins aus der gleichen Polyolefin-Stoffgruppe, insbesondere auf Basis von Polypropylenen, ausgebildet sind. Wenn die Endlosfilamente der zumindest einen Armierungs-Spinnvlieslage gemäß besonders bevorzugter Ausführungsform der Erfindung als Mehrkomponentenfilamente bzw. Bikomponentenfilamente mit Kern-Mantel-Konfiguration ausgebildet sind, bei denen die Bindekomponente die Mantelkomponente bildet, ist es besonders bevorzugt, dass auch die Kernkomponente der Endlosfilamente mit Kern-Mantel-Konfiguration der Armierungs-Spinnvlieslage auf Basis eines Polyolefins aus der gleichen Polyolefin-Stoffgruppe wie die Bindekomponente, die erste und die zweite Kunststoffkomponente ausgebildet ist. Gleiche Polyolefin-Stoffgruppe meint im Rahmen der Erfindung insbesondere Polyolefine, die auf Basis des gleichen Olefin-Monomers ausgebildet sind, sodass beispielsweise Homo-Polypropylene und Polypropylen-Copolymere zur gleichen Polyolefin-Stoffgruppe, nämlich basierend auf Propylen, gehören.

Es liegt im Rahmen der Erfindung, dass die Endlosfilamente der zumindest einen Crimp-Spinnvlieslage Mehrkomponentenfilamente, insbesondere Bikomponentenfilamente, mit Seite-an-Seite-Konfiguration und/oder mit Kern-Mantel-Konfiguration, vorzugsweise mit exzentrischer Kern-Mantel-Konfiguration, sind und wobei bevorzugt im Falle einer Kern-Mantel-Konfiguration bzw. exzentrischen Kern-Mantel-Konfiguration, die erste, vorzugsweise niedrigschmelzende, Kunststoffkomponente der Endlosfilamente der zumindest einen Crimp-Spinnvlieslage die Mantelkomponente bildet. Dann bildet bevorzugt die zweite, vorzugsweise höherschmelzende, Kunststoffkomponente der Endlosfilamente der zumindest einen Crimp-Spinnvlieslage die Kernkomponente. Im Falle von Endlosfilamenten mit Seite-an-Seite-Konfiguration bilden bevorzugt die erste und die zweite Kunststoffkomponente jeweils eine Seite der Filamente. Mit dem Ausdruck Konfiguration von Endlosfilamenten ist im Übrigen im Rahmen der Erfindung insbesondere die Querschnittskonfiguration der Filamente gemeint.

Es ist ganz besonders bevorzugt, dass die erste, vorzugsweise niedrigschmelzende, Kunststoffkomponente der Endlosfilamente der zumindest einen Crimp-Spinnvlieslage ein Polypropylen-Copolymer ist und insbesondere aus einem Polypropylen-Copolymer besteht bzw. im Wesentlichen besteht. Es liegt im Rahmen der Erfindung, dass es sich dabei um das gleiche Polypropylen-Copolymer handelt, das bevorzugt den ersten Kunststoff der Bindekomponente der Endlosfilamente der Armierungs-Spinnvlieslage bildet. Es ist weiter bevorzugt, dass die zweite, vorzugsweise höherschmelzende, Kunststoffkomponente der Endlosfilamente der zumindest einen Crimp-Spinnvlieslage zumindest ein Homo-Polypropylen ist und insbesondere aus einem Homo-Polypropylen besteht bzw. im Wesentlichen besteht. Bei dem Homo-Polypropylen handelt es sich vorzugsweise um ein durch Ziegler-Natta-Katalyse polymerisiertes Polypropylen. Gemäß einer Ausführungsform handelt es sich bei dem Homo-Polypropylen der zweiten, vorzugsweise höherschmelzenden, Kunststoffkomponente der zumindest einen Crimp-Spinnvlieslage und dem Homo-Polypropylen, das vorzugsweise für die Kernkomponente der Endlosfilamente mit Kern-Mantel-Konfiguration der Armierungs-Spinnvlieslage eingesetzt wird um das gleiche oder um ein unterschiedliches Homo-Polypropylen.

Wenn die Endlosfilamente der zumindest einen Crimp-Spinnvlieslage Mehrkomponentenfilamente, insbesondere Bikomponentenfilamente, mit exzentrischer Kern-Mantel-Konfiguration sind, liegt es im Rahmen der Erfindung, dass sowohl der Mantel der Filamente als auch der Kern der Filamente - im Filamentquerschnitt gesehen - kreisförmig ausgebildet ist. Gemäß einer weiteren bevorzugten Ausführungsform der Erfindung sind die Mehrkomponentenfilamente bzw. Bikomponentenfilamente als Mehrkomponentenfilamente bzw. Bikomponentenfilamente mit exzentrischer Kern-Mantel-Konfiguration ausgebildet und der Kern dieser Filamente ist - im Filamentquerschnitt gesehen - kreissegmentförmig ausgebildet und weist bezüglich seines Umfanges einen kreisbogenförmigen Umfangsabschnitt sowie einen linearen Umfangsabschnitt auf, sodass gleichsam eine D-Form des Kerns - im Filamentquerschnitt gesehen - resultiert. Die vorstehenden Ausführungen im Hinblick auf die Querschnittsausgestaltung von Endlosfilamenten mit exzentrischer Kern-Mantelkonfiguration gelten im Übrigen auch für die Ausführungsform des erfindungsgemäßen Spinnvlieslaminates, bei der die Endlosfilamente der zumindest einen Armierungs-Spinnvlieslage als Mehrkomponentenfilamente, insbesondere als Bikomponentenfilamente, mit exzentrischer Kern-Mantel-Konfiguration ausgebildet sind.

Es hat sich bewährt, dass das Massenverhältnis der ersten, vorzugsweise niedrigschmelzenden, Kunststoffkomponente der Endlosfilamente der zumindest einen Crimp-Spinnvlieslage zu der zweiten, vorzugsweise höherschmelzenden, Kunststoffkomponente der zumindest einen Crimp-Spinnvlieslage 10:90 bis 60:40, vorzugsweise 25:75 bis 50:50, bevorzugt 30:70 bis 40:60 beträgt.

Erfindungsgemäß ist zumindest eine zweite Crimp-Spinnvlieslage vorhanden und ist die zumindest eine Armierungs-Spinnvlieslage zwischen den zumindest zwei Crimp-Spinnvlieslagen, insbesondere zwischen den zwei Crimp-Spinnvlieslagen, angeordnet. Ganz besonders bevorzugt ist das erfindungsgemäße Spinnvlieslaminat somit zumindest dreilagig, insbesondere dreilagig, und weist eine erste Crimp-Spinnvlieslage, eine vorzugsweise darüber angeordnete Armierungs-Spinnvlieslage und bevorzugt eine über der Armierungs-Spinnvlieslage angeordnete zweite Crimp-Spinnvlieslage auf. Es hat sich gezeigt, dass durch ein solches zumindest dreilagiges, insbesondere dreilagiges, Laminat mit einer zwischen zwei Crimp-Spinnvlieslagen angeordneten Armierungs-Spinnvlieslage das erfindungsgemäße technische Problem besonders funktionssicher gelöst wird und dass insbesondere ein besonders vorteilhafter Kompromiss zwischen Längssteifigkeit, Drapierbarkeit und Abriebfestigkeit realisiert werden kann. Es ist im Übrigen bevorzugt, dass die oben stehenden Ausführungen bezüglich der Ausgestaltung der Crimp-Spinnvlieslage bzw. ersten Crimp-Spinnvlieslage auch für die Ausgestaltung der zweiten Crimp-Spinnvlieslage gelten. Vorzugsweise sind die erste Crimp-Spinnvlieslage und die zweite Crimp-Spinnvlieslage hinsichtlich ihrer Ausgestaltung identisch bzw. im Wesentlichen identisch. Die erste und die zweite Crimp-Spinnvlieslage können sich aber grundsätzlich in ihrer Ausgestaltung und ihren Eigenschaften auch unterscheiden. Wenn das erfindungsgemäße Spinnvlieslaminat gemäß bevorzugter Ausführungsform zumindest zwei Crimp-Spinnvlieslagen aufweist, ist es möglich, dass beide Crimp-Spinnvlieslagen den gleichen Kräuselungsgrad bzw. im Wesentlichen den gleichen Kräuselungsgrad aufweisen. Es ist aber auch möglich, dass die zumindest zwei Crimp-Spinnvlieslagen einen unterschiedlichen Kräuselungsgrad aufweisen, der aber jeweils höher ist als der Kräuselungsgrad der Endlosfilamente der Armierungs-Spinnvlieslage.

Erfindungsgemäß beträgt das Verhältnis der Zugfestigkeit des Laminates in Maschinenrichtung (MD) zur Zugfestigkeit des Laminates quer zu Maschinenrichtung (CD) 1,1 bis 2,3, bevorzugt 1,2 bis 2,0, besonders bevorzugt 1,3 bis 1,9. Zweckmäßigerweise beträgt die Zugfestigkeit des Laminates in Maschinenrichtung (MD-Richtung) zumindest 8 N/5 cm, insbesondere zumindest 10 N/5 cm, vorzugsweise zumindest 15 N/5 cm, bevorzugt zumindest 17,5 N/5 cm, besonders bevorzugt zumindest 20 N/5 cm, ganz besonders bevorzugt zumindest 22,5 N/5 cm, beispielsweise zumindest 28 N/5 cm. Weiter bevorzugt beträgt die Zugfestigkeit des Vliesstoffes quer zu Maschinenrichtung (CD-Richtung) zumindest 6 N/5 cm, insbesondere zumindest 8 N/5 cm, vorzugsweise zumindest 10 N/5 cm, bevorzugt zumindest 12 N/5 cm, besonders bevorzugt zumindest 15 N/5 cm. Die Zugfestigkeit des Vliesstoffes wird im Rahmen der Erfindung insbesondere nach der folgenden Methode bestimmt: "Determination of tensile strength (based on Edana 20.2-89)": in N/5 cm; mit 50 mm Probenbreite; 100 mm Einspannlänge; 200 mm/min Prüfgeschwindigkeit.

Eine bevorzugte Ausführungsform des erfindungsgemäßen Spinnvlieslaminates ist dadurch gekennzeichnet, dass sich für das Laminat in Maschinenrichtung (MD) eine Zugkraft von größer als 3,0 N/5 cm, vorzugsweise von größer als 4,0 N/5 cm, bevorzugt von größer als 4,5 N/5 cm bei 5 % Dehnung und/oder eine Zugkraft von größer als 5,0 N/5 cm, bevorzugt von größer als 6,0 N/5 cm, besonders bevorzugt von größer als 7,0 N/5 cm bei 10 % Dehnung ergibt. Die Messung der Zugkraft in Maschinenrichtung (MD) bei der angegebenen Dehnung bzw. der Spannungs-Dehnungskurve erfolgt insbesondere nach der Prüfnorm DIN EN 29073-3. Es liegt im Rahmen der Erfindung, dass dabei eine Vliesprobe bzw. Laminatprobe mit einer Breite von 50 mm zwischen zwei Klemmeinrichtungen mit einem Abstand von 100 mm eingespannt wird, sodass die untersuchte/gemessene Länge der Probe 100 mm beträgt. Anschließend wird diese Vliesprobe bzw. Laminatprobe mittels einer Zugmaschine bei einem Vorschub von 100 mm/min bis zu einer Vorkraft von 0,5 N gespannt. In diesem Zustand erfolgt dann das Zurücksetzen der Messung auf Null und die eigentliche Messung beginnt. Die Zugmaschine arbeitet dabei mit einem Vorschub bzw. mit einer Zuggeschwindigkeit von 200 mm/min. Die Zugkraft in Maschinenrichtung (MD) wird wie oben bereits dargelegt als Kraft bei 5 % Dehnung der Probe und/oder bei 10 % Dehnung der Probe aus der Spannungs-Dehnungskurve ermittelt. Die Zugkraft in Maschinenrichtung (MD) ist dabei insbesondere ein Maß für die Längssteifigkeit des Spinnvlieslaminates.

Gemäß einer besonders empfohlenen Ausführungsform der Erfindung weist das Spinnvlieslaminat ein Prägemuster auf, wobei das Prägemuster aus einer Vielzahl von - vorzugsweise nicht miteinander verbundenen - Prägungen besteht, wobei die Prägungen jeweils eine Prägefläche von 0,05 bis 0,3 mm², vorzugsweise von 0,06 bis 0,2 mm², bevorzugt von 0,07 bis 0,18 mm², besonders bevorzugt von 0,08 bis 0,15 mm² und ganz besonders bevorzugt von 0,09 bis 0,12 mm² aufweisen. Der Begriff Prägung meint im Rahmen der Erfindung insbesondere eine verdichtete Stelle des Laminates bzw. des Vliesstoffes, an der das Laminat im Vergleich zu seinen nicht-geprägten Bereichen insbesondere eine geringere Dicke aufweist und an der die Fasern des Laminates vorzugsweise durch Einwirkung von Druck und/oder Temperatur zumindest teilweise miteinander verbunden bzw. verschmolzen sind. Die Prägungen des Prägemusters sind bevorzugt durch zumindest eine Kalanderwalze mit einem Komplementärprägemuster aus Prägeelementen erzeugt.

Der Begriff Prägemuster meint im Rahmen der Erfindung insbesondere das sich aus der Vielzahl von Prägungen des Laminates bzw. des Vliesstoffes ergebende Muster. Bei dem Prägemuster kann es sich um ein regelmäßiges und/oder um ein unregelmäßiges Prägemuster handeln. Dann sind die einzelnen Prägungen vorzugsweise in regelmäßigen Abständen, bevorzugt in identischen Abständen auf dem Laminat verteilt. Weiter bevorzugt ist die Prägefläche der einzelnen Prägungen des Prägemusters gemäß bevorzugter Ausführungsform der Erfindung gleich groß bzw. im Wesentlichen gleich groß. Es hat sich bewährt, dass auch die Geometrie der Prägeflächen der einzelnen Prägungen identisch bzw. im Wesentlichen identisch ist. Ganz besonders bevorzugt weist das Prägemuster gleiche bzw. gleich große Prägungen oder im Wesentlichen gleiche bzw. gleich große Prägungen mit homogener Verteilung von Prägungen gleicher Geometrie bzw. von im Wesentlichen gleicher Geometrie auf. Grundsätzlich ist es aber auch möglich, dass die einzelnen Prägungen des Prägemusters eine voneinander verschiedene Größe und/oder eine voneinander verschiedene Geometrie aufweisen und/oder dass die Prägungen in einem unregelmäßigen Prägemuster auf dem Vliesstoff angeordnet sind. Geometrie der Prägungen meint im Rahmen der Erfindung im Übrigen insbesondere die Geometrie der Prägeflächen der Prägungen in der Draufsicht.

Prägefläche einer Prägung meint im Rahmen der Erfindung insbesondere die geprägte Fläche einer Prägung, wobei bei der Bestimmung der Größe der Prägefläche ein sich gegebenenfalls im Zuge des Press- bzw. Prägevorganges bildender und die Prägung zumindest teilweise umschließender Materialüberstand bzw. Materialwulst insbesondere nicht Teil der Prägefläche einer Prägung ist. Im Falle einer Prägung bzw. Prägefläche mit einer in der Draufsicht punktförmigen bzw. kreisförmigen Geometrie entspricht die Prägefläche der Prägung beispielsweise dem Flächeninhalt der punktförmigen bzw. kreisförmigen Prägung, wobei der die Prägung gegebenenfalls umgebende Materialüberstand bzw. die Materialwulst nicht zu der Prägefläche der Prägung hinzuzählt. Dass die Prägungen des erfindungsgemäßen Vliesstoffes bzw. Laminates jeweils eine Prägefläche in dem oben stehend angegebenen Bereich aufweisen, meint im Rahmen der Erfindung insbesondere, dass zumindest 95 %, vorzugsweise zumindest 97 % aller Prägungen des Vliesstoffes eine Prägefläche in dem angegebenen Bereich aufweisen. Besonders bevorzugt weisen alle Prägungen des Vliesstoffes eine Prägefläche in dem angegebenen Bereich auf. Die Prägefläche einer Prägung kann im Rahmen der Erfindung insbesondere durch Auflicht- oder Durchlicht-2D-Mikroskopie, und/oder durch Rasterelektronenmikroskopie (REM) und/oder durch Mikro-Computertomografie (µCT) ermittelt werden. Bei der entsprechenden Bildauswertung wird vorzugsweise eine der Prägeflächengeometrie zugrundeliegende bzw. der Prägeflächengeometrie entsprechende bzw. im Wesentlichen entsprechende Geometrie zugrunde gelegt und zur Auswertung über die einzelnen optisch abgebildeten Prägeflächen der Prägungen gelegt.

Der bevorzugten Ausführungsform des erfindungsgemäßen Spinnvlieslaminates mit einem Prägemuster, bei dem die Prägungen jeweils eine Prägefläche in der vorstehend angegebenen Größe aufweisen, liegt die Erkenntnis zugrunde, dass sich das Spinnvlieslaminat dann durch besonders vorteilhafte mechanische Eigenschaften auszeichnet und dass aufgrund der speziellen Größe der Prägeflächen nichtsdestoweniger ein Laminat bereitgestellt werden kann, bei dem optische Beeinträchtigungen durch das Prägemuster aus Prägungen aufgrund einer vergleichsweise deutlich verringerten Wahrnehmbarkeit des Prägemusters für das menschliche Auge nahezu vollständig vermieden werden können.

Es liegt im Rahmen der Erfindung, dass der Anteil der Gesamtprägefläche des Prägemusters an der Gesamtoberfläche des Laminates 2 bis 12 %, vorzugsweise 2,5 bis 8 %, bevorzugt 3 bis 6 %, besonders bevorzugt 3,5 bis 5,5 % und ganz besonders 4 bis 5 % beträgt. Es liegt außerdem im Rahmen der Erfindung, dass der Anteil der Gesamtprägefläche des Prägemusters an der Gesamtoberfläche des Laminates weniger als 10 %, vorzugsweise weniger als 8 %, bevorzugt weniger als 7,5 %, sehr bevorzugt weniger als 6,5 %, besonders bevorzugt weniger als 5,5 % und ganz besonders bevorzugt weniger als 5 % beträgt. Durch diesen Anteil der Gesamtprägefläche des Prägemusters an der Gesamtoberfläche des Laminates bzw. Vliesstoffes kann die optische Wahrnehmbarkeit des Prägemusters aus Prägungen weiter reduziert werden. Nichtsdestoweniger resultiert ein Laminat mit zufriedenstellenden mechanischen Eigenschaften. Gesamtprägefläche des Prägemusters meint in diesem Zusammenhang insbesondere die Summe aller Prägeflächen des Prägemusters. Gesamtoberfläche des Laminates bzw. Vliesstoffes meint im Rahmen der Erfindung insbesondere die gesamte Laminatoberfläche einschließlich der geprägten und nicht-geprägten Bereiche.

Es ist sehr bevorzugt, dass der kleinste Abstand d zweier Prägungen des Prägemusters jeweils 0,6 bis 2,5 mm, vorzugsweise 0,8 bis 2,0 mm, bevorzugt 0,9 bis 1,8 mm, besonders bevorzugt 0,95 bis 1,6 mm und ganz besonders bevorzugt 1,0 bis 1,5 mm beträgt. Zweckmäßigerweise beträgt der kleinste Abstand d zweier Prägungen des Prägemusters jeweils zumindest 0,6 mm, insbesondere zumindest 0,8 mm, bevorzugt zumindest 1,0 mm, besonders bevorzugt zumindest 1,4 mm und ganz besonders bevorzugt zumindest 2,0 mm. Kleinster Abstand d zweier Prägungen des Prägemusters meint dabei insbesondere den kleinsten Abstand d zweier unmittelbar benachbarter Prägungen des Prägemusters, also bevorzugt den kleinsten Abstand einer Prägung zu der ihr nächstgelegenen Prägung des Prägemusters. Darüber hinaus bezieht sich der kleinste Abstand d zweier Prägungen des Prägemusters insbesondere auf den kleinsten Abstand zwischen den Prägungsbegrenzungen zweier Prägungen, also auf den kleinsten Abstand der beiden Prägungen entlang der dazwischenliegenden nicht-geprägten Fläche des Vliesstoffes. Dieser Ausführungsform liegt die Erkenntnis zugrunde, dass die optische Wahrnehmbarkeit des Prägemusters aus Prägungen weiter reduziert werden kann, wobei nichtsdestoweniger vorteilhafte mechanische Eigenschaften des Laminates sichergestellt sind. Der vorstehend beschriebene kleinste Abstand zweier Prägungen des Prägemusters bezieht sich bevorzugt auf zumindest 95 %, vorzugsweise auf zumindest 97 % aller Prägungen des Laminates. Besonders bevorzugt bezieht sich der beschriebene kleinste Abstand zweier Prägungen auf alle Prägungen des Laminates.

Empfohlenermaßen weisen die Prägeflächen der Prägungen in der Draufsicht zumindest eine Geometrie ausgewählt aus der Gruppe: "punktförmig bzw. kreisförmig, ellipsenförmig, quadratisch, rechteckig, rautenförmig, mehreckig, linienförmig, wellenförmig" auf. Wie bereits oben stehend beschrieben wurde, meint Prägefläche einer Prägung insbesondere die geprägte Fläche einer Prägung ohne den die Prägefläche gegebenenfalls umgebenden Materialüberstand bzw. Materialwulst. Es ist bevorzugt, dass die Prägeflächen bzw. die Prägungen des Prägemusters jeweils die gleiche bzw. im Wesentlichen die gleiche Geometrie aufweisen. Es liegt grundsätzlich aber auch im Rahmen der Erfindung, dass das Prägemuster Prägeflächen bzw. Prägungen unterschiedlicher Geometrie aufweist. Eine ganz besonders bevorzugte Ausführungsform der Erfindung ist dadurch gekennzeichnet, dass die Prägeflächen der Prägungen bzw. aller Prägungen in der Draufsicht punktförmig bzw. kreisförmig sind.

Eine empfohlene Ausführungsform der Erfindung zeichnet sich dadurch aus, dass das Laminat bzw. der Vliesstoff ein Flächengewicht von weniger als 200 g/m², insbesondere von weniger als 150 g/m², vorzugsweise von weniger als 100 g/m², bevorzugt von weniger als 75 g/m², besonders bevorzugt von weniger als 50 g/m² und ganz besonders bevorzugt von weniger als 30 g/m² aufweist. Es ist besonders bevorzugt, dass das Flächengewicht des Laminates 10 g/m² bis 80 g/m², vorzugsweise 15 g/m² bis 60 g/m², bevorzugt 15 g/m² bis 30 g/m² beträgt. Gemäß einer anderen bevorzugten Ausführungsform der Erfindung beträgt das Flächengewicht des Laminates 11 g/m² bis 60 g/m², bevorzugt 12 g/m² bis 30 g/m².

Es ist weiterhin bevorzugt, dass der Vliesstoff bzw. das Laminat eine Dicke h von 0,1 bis 0,85 mm, vorzugsweise von 0,15 bis 0,75 mm, bevorzugt von 0,2 bis 0,65 mm, besonders bevorzugt von 0,25 bis 0,55 mm aufweist. Es liegt im Rahmen der Erfindung, dass der Vliesstoff eine Dicke h von weniger als 0,85 mm, bevorzugt von weniger als 0,75 mm, besonders bevorzugt von weniger als 0,65 mm, besonders bevorzugt von weniger als 0,5 mm, sehr bevorzugt von weniger als 0,45 mm, ganz besonders bevorzugt von weniger als 0,4 mm, beispielsweise von weniger als 0,35 mm aufweist. Dicke h meint dabei die größte Dicke bzw. Gesamtdicke des Laminates quer, insbesondere senkrecht bzw. im Wesentlichen senkrecht zu seiner flächigen Erstreckung in den nicht-geprägten Bereichen des Laminates. Die Dicke bzw. Gesamtdicke h des Vliesstoffes wird dabei insbesondere nach der Methode WRT 120.6(05)-Option A gemessen. Die Dicke h bezieht sich im Rahmen der Erfindung insbesondere auf das fertige, gegebenenfalls vorverfestigte und/oder endverfestigte, Laminat.

Eine sehr bewährte Ausführungsform der Erfindung zeichnet sich dadurch aus, dass das Laminat eine Abriebfestigkeit von zumindest Klasse 2 nach Martindale, vorzugsweise von Klasse 1 nach Martindale aufweist. Dieser Ausführungsform liegt die Erkenntnis zugrunde, dass sich das Laminat bzw. der Vliesstoff dann durch eine sehr zufriedenstellende Abriebfestigkeit auszeichnet und dass insbesondere auch Delaminationsvorgänge des Laminates während des Martindale-Tests vermieden werden. Die Abriebfestigkeit des Laminates bzw. Vliesstoffes wird im Rahmen der Erfindung mit einem Martindale Abrieb-Testgerät nach folgender Testmethode bestimmt:
Es wird als Testgerät insbesondere das Gerät "SDL Atlas M235 Martindale Tester" verwendet. Das Vorgehen zur Ermittlung der Abriebfestigkeit basiert vorzugsweise auf WSP20.5(05), wobei insbesondere die folgenden Abweichungen zu WSP20.5(05) vorgesehen werden: Die Oberfläche (oben/unten) wird separat geprüft; mindestens 10, bevorzugt mindestens 20 Prüfungen werden pro Muster und Oberfläche durchgeführt, wobei die Prüflinge gleichmäßig aus der Fläche der Probe gewonnen werden, das Endergebnis ist der arithmetische Mittelwert. Die Prüflinge sind aus einer repräsentativen Position zu gewinnen, also beispielsweise nicht alleine vom Rand, da der Test bzw. die Abweichungen im Ergebnis nicht durch makroskopische Abweichungen, wie durch schlechte Prozesskontrolle, sondern nur von typischen (lokalen) Schwankungen beeinflusst werden soll; die getestete Probe wird auf Standardfilz gespannt und im unteren Halter montiert; als bewegte obere Reibfläche wird der gleiche Vliesstoff verwendet mit der zu testenden Seite gegeneinander, dieses Stück wird zusammen mit dem PU-Schaumstoffflicken (z.B. von SDL Atlas) befestigt; 9 kPa Andruck; 32 Zyklen, das heißt zwei volle Runden der Lissajous Figur; nach jeder der Prüfungen werden das Paar (Prüfling und obere Reibfläche) ausgetauscht;
die Proben werden mit den Noten 1 bis 5 bewertet, wobei 1 die Bestnote ist. Wenn beispielsweise der Mittelwert auf der Oberseite eine 1 und auf der Unterseite eine 3 ergibt, wird die Probe insgesamt mit 1 bewertet. Bewertet werden nur die Veränderungen im Vlies, wenn das Vlies vorher ähnliche Defekte aufweist sind diese zu übersehen. Hier sind etwa Fasersträhnen - Gruppen oder Bündel von Fasern auf der Oberfläche - gemeint. Weist ein Prüfling diese Fehler von vornherein deutlich auf, so ist der Prüfling im Zweifel auszuschließen.

Note 1: Praktisch keine Veränderung von oben betrachtet. Die Oberfläche darf leicht angelöst werden, dabei dürfen die Filamente sich nur lockern und keine größeren bzw. längeren Zusammenballungen erzeugen. Von der Seite betrachtet darf die Florhöhe der losen Filamente 5 mm nicht überschreiten. Einzelne Filamente bzw. Filamente dürfen zu einem kleinen Ball <2 mm Durchmesser zusammengeschoben werden.

Note 2: zusätzlich zu dem oberen Schadensbild (Note 1): Filamente werden gelockert und mit Nachbarfilamenten zu einem länglichen Agglomerat verfilzt. Diese Filamentgruppen werden "Strähnen" oder "string bzw. bundle" genannt. Diese Strähnen sind 5 bis 40 mm lang und mind. alle 10 mm Länge mit dem Untergrund verbunden. Eine Strähne ist max. 5 mm hoch (steht 5 mm über der Oberfläche) und max. 2 mm breit.

Note 3: Die obigen "Strähnen" sind nicht mehr entlang ihrer Länge mit dem Untergrund verbunden - mögliche Verbindungen sind >10 mm untereinander entfernt bzw. die Strähnen hier sind nur noch am Start- und Endpunkt mit der Probe verbunden. Es ist möglich, diese Strähne z.B. mit einer Nadel anzuheben und zu verschieben.

Note 4: Die Strähnen sind mit Nachbarsträhnen zu einem Netzwerk verbunden. "Spinnennetz" (spider web).

Note 5: Die Probe ist weiter zerstört, erste Lochbildung ist aufgetreten.

Eine bewährte Ausführungsform der Erfindung ist dadurch gekennzeichnet, dass das Laminat bzw. der Vliesstoff mit zumindest einer Kalanderwalze - insbesondere zur Erzeugung des vorstehend beschriebenen bevorzugt vorgesehenen Prägemusters - und vorzugsweise mit zumindest einer Heißfluid-Hauptverfestigungseinrichtung, insbesondere mit zumindest einer Heißluft-Hauptverfestigungseinrichtung, verfestigt ist. Die zumindest eine Kalanderwalze ist vorzugsweise Teil eines Kalanders, der bevorzugt zumindest zwei Kalanderwalzen bzw. zumindest ein Kalanderwalzenpaar umfasst. Wenn das Laminat gemäß bevorzugter Ausführungsform mit zumindest einer Kalanderwalze - insbesondere zur Erzeugung des Prägemusters - und mit zumindest einer Heißfluid-Hauptverfestigungseinrichtung verfestigt ist, resultiert insbesondere ein Spinnvlieslaminat, das sich durch eine weiter verbesserte mechanische Stabilität und gleichzeitig durch eine vorteilhaft niedrige Biegesteifigkeit und außerdem vorzugsweise durch eine zufriedenstellende Abriebfestigkeit sowie weiterhin bevorzugt durch vorteilhafte optische Eigenschaften auszeichnet.

Zur Lösung des technischen Problems lehrt die Erfindung weiterhin ein Verfahren gemäß Patentanspruch 21 zur Herstellung eines Spinnvlieslaminates - insbesondere eines vorstehend beschriebenen Spinnvlieslaminates.

Im Rahmen des erfindungsgemäßen Verfahrens ist es bevorzugt, dass kräuselnde Endlosfilamente erzeugt und zu zumindest einer zweiten Crimp-Spinnvlieslage abgelegt werden, insbesondere oberhalb der zumindest einen Armierungs-Spinnvlieslage abgelegt werden, sodass ganz besonders bevorzugt ein zumindest dreilagiges, insbesondere ein dreilagiges, Laminat resultiert, bei dem die zumindest eine Armierungs-Spinnvlieslage die Mittellage bildet.

Es ist besonders bevorzugt, dass das Laminat mit zumindest einer Kalanderwalze verfestigt bzw. endverfestigt wird und wobei mittels der zumindest einen Kalanderwalze vorzugsweise ein Prägemuster aus einer Vielzahl von Prägungen in das Laminat eingebracht wird, wobei die Prägungen bevorzugt jeweils eine Prägefläche von 0,05 bis 0,3 mm², vorzugsweise von 0,06 bis 0,2 mm², bevorzugt von 0,07 bis 0,18 mm², besonders bevorzugt von 0,08 bis 0,15 mm² und ganz besonders bevorzugt von 0,09 bis 0,12 mm² aufweisen.

Es liegt im Rahmen des erfindungsgemäßen Verfahrens, dass das Laminat bzw. der Vliesstoff - vorzugsweise im Anschluss an die Verfestigung mit der zumindest einen Kalanderwalze, insbesondere mit zumindest einem die Kalanderwalze aufweisenden Kalander bzw. Kalanderwalzenpaar, - mit zumindest einer Heißfluid-Hauptverfestigungseinrichtung, insbesondere mit zumindest einer Heißluft-Hauptverfestigungseinrichtung verfestigt, insbesondere hauptverfestigt wird. Gemäß weiter bevorzugter Ausführungsform des erfindungsgemäßen Verfahrens wird das Laminat nach der Ablage auf einer Ablageeinrichtung, insbesondere auf einem Ablagesiebband, zunächst mit zumindest einer Vorverfestigungseinrichtung, insbesondere mit zumindest einer Heißfluid-Vorverfestigungseinrichtung, vorzugsweise mit zumindest einer Heißluft-Vorverfestigungseinrichtung vorverfestigt, vorzugsweise anschließend mit der zumindest einen Kalanderwalze verfestigt und darauffolgend vorzugsweise mit einer Heißfluid-Hauptverfestigungseinrichtung bzw. Heißluft-Hauptverfestigungseinrichtung verfestigt, insbesondere hauptverfestigt. Vorverfestigung meint im Rahmen der Erfindung insbesondere eine Verfestigung des Laminates bzw. einer Lage des Laminates, die die Transportfähigkeit sicherstellt, aber vorzugsweise zu einem geringeren Verfestigungsgrad des Laminates führt als eine Verfestigung bzw. Hauptverfestigung.

Es liegt im Rahmen der Erfindung, dass die zumindest eine Crimp-Spinnvlieslage, vorzugsweise die zumindest zwei Crimp-Spinnvlieslagen, und die zumindest eine Armierungs-Spinnvlieslage nach dem Spundbond-Verfahren bzw. als Spunbond-Lagen erzeugt werden. Dazu werden die Endlosfilamente zunächst aus einem Spinnkopf bzw. aus einer Spinnerette ersponnen. Die ersponnenen Endlosfilamente werden zweckmäßigerweise danach in einer Kühlkammer abgekühlt und in einer Verstreckeinrichtung verstreckt. Die Abkühlung und Verstreckung erfolgt dabei insbesondere in einer kombinierten Abkühl- und Verstreckeinheit. Es empfiehlt sich, dass die Verstreckung der Endlosfilamente als aerodynamische Verstreckung erfolgt. Es liegt im Rahmen der Erfindung, dass das Aggregat aus der Kühlkammer und der Verstreckeinrichtung bzw. die kombinierte Abkühl- und Verstreckeinheit - abgesehen von der Luftzufuhr in der Kühlkammer bzw. Kühleinheit - als geschlossenes System ausgebildet ist. Das bedeutet, dass in diesem Aggregat außer der genannten Luftzufuhr in der Kühlkammer bzw. Kühleinheit keine weitere Luftzufuhr stattfindet. Diese Ausführungsform des geschlossenen Systems hat sich für die Herstellung eines erfindungsgemäßen Laminates besonders bewährt. Nach einer bevorzugten Ausführungsform der Erfindung werden die abgekühlten und verstreckten Endlosfilamente für die Spinnvlieslagen des Spinnvlieslaminates durch zumindest einen Diffusor geführt und im Anschluss daran auf einer Ablageeinrichtung, insbesondere auf einem Ablagesiebband, abgelegt. Zweckmäßigerweise werden zunächst die Endlosfilamente für die (erste) Crimp-Spinnvlieslage, anschließend die Endlosfilamente für die Armierungs-Spinnvlieslage und gemäß bevorzugter Ausführungsform darauffolgend die Endlosfilamente für die zweite Crimp-Spinnvlieslage auf der Ablageeinrichtung bzw. auf dem Ablagesiebband abgelegt. Grundsätzlich sind auch andere Abfolgen der Erzeugung und der Ablage der einzelnen Spinnvlieslagen und somit andere Lagenstrukturen des resultierenden Laminates möglich.

Der Erfindung liegt die Erkenntnis zugrunde, dass sich das erfindungsgemäße Spinnvlieslaminat durch einen optimalen Kompromiss aus mechanischer Stabilität, insbesondere einer ausreichenden Längssteifigkeit, aus einer zufriedenstellenden Drapierbarkeit, insbesondere einer vorteilhaft niedrigen Biegesteifigkeit, und nichtsdestoweniger durch eine ausreichende Abriebfestigkeit auszeichnet. Delaminationsvorgänge können bei dem erfindungsgemäßen Spinnvlieslaminat weitestgehend vermieden werden. Bei dem erfindungsgemäßen Spinnvlieslaminat ist insbesondere die zumindest eine Crimp-Spinnvlieslage für die vorteilhafte Drapierbarkeit bzw. niedrige Biegesteifigkeit verantwortlich. Die zumindest eine Armierungs-Spinnvlieslage trägt vor allem dazu bei, dass sich das Spinnvlieslaminat durch eine vorteilhafte mechanische Stabilität, insbesondere durch eine zufriedenstellende Längssteifigkeit auszeichnet. Darüber hinaus trägt die Armierungs-Spinnvlieslage bzw. die Abstimmung der Komponenten der Filamente der Armierungs-Spinnvlieslage und der zumindest einen Crimp-Spinnvlieslage in vorteilhafter Weise dazu bei, dass Delaminationsvorgänge bei dem Spinnvlieslaminat vermieden werden und dass eine weiter verbesserte Abriebfestigkeit des Spinnvlieslaminates resultiert. Wenn gemäß bevorzugter Ausführungsform des erfindungsgemäßen Spinnvlieslaminates bzw. des erfindungsgemäßen Verfahrens ein Prägemuster aus einer Vielzahl von Prägungen mit der speziellen Prägeflächengröße vorgesehen ist, trägt dies weiterhin zu einer vorteilhaften mechanischen Stabilität des Spinnvlieslaminates bei, wobei optische Beeinträchtigungen des Spinnvlieslaminates durch das Prägemuster nahezu vollständig vermieden werden. Es ist außerdem zu betonen, dass die erfindungsgemäßen Vorteile mit wenig aufwendigen Maßnahmen erreicht werden, sodass sich das erfindungsgemäße Spinnvlieslaminat und auch das erfindungsgemäße Verfahren zur Herstellung eines solchen Spinnvlieslaminates auch durch eine vorteilhafte Wirtschaftlichkeit auszeichnen.

Nachfolgend wird die Erfindung anhand eines lediglich eine bevorzugte Ausführungsform der Erfindung darstellenden Ausführungsbeispiels näher erläutert. Es wird im Rahmen der Erfindung und im Ausführungsbeispiel ein erfindungsgemäßes Spinnvlieslaminat aus drei Spinnvlieslagen mittels einer Dreibalkenanlage erzeugt. Die drei Spinnvlieslagen werden dabei insbesondere nach dem Spunbond-Verfahren erzeugt. Zweckmäßigerweise werden die drei Spinnvlieslagen nach der Reicofil-Methode hergestellt, wobei die für eine Spinnvlieslage ersponnenen Filamente zunächst durch eine Kühlkammer geführt und dort mit Kühlluft gekühlt und im Anschluss daran in eine Verstreckeinheit zur aerodynamischen Verstreckung eingeführt werden. Zweckmäßigerweise und im Ausführungsbeispiel wird bei der Herstellung jeder Spinnvlieslage mit einer kombinierten Abkühl- und Verstreckeinheit gearbeitet, die als geschlossenes System ausgebildet ist. Das bedeutet, dass in dieser Abkühl- und Verstreckeinheit, abgesehen von der Luftzufuhr in der Kühlkammer, keine weitere Luftzufuhr von außen erfolgt. Nach dem Durchlaufen der Verstreckeinheit werden die Filamente jeder Spinnvlieslage durch einen Diffusor geführt und im Anschluss daran auf einem Ablagesiebband zur Spinnvlieslage abgelegt.

Im Rahmen der Erfindung und im Ausführungsbeispiel besteht eine untere (erste) Crimp-Spinnvlieslage aus gekräuselten Endlosfilamenten mit exzentrischer Kern-Mantel-Konfiguration. Die erste, vorzugsweise und im Ausführungsbeispiel niedrigschmelzende, Kunststoffkomponente der Endlosfilamente bildet dabei zweckmäßigerweise und im Ausführungsbeispiel die Mantelkomponente und besteht bevorzugt im Wesentlichen aus einem Polypropylen-Copolymer (Basell RP248R). Die zweite, vorzugsweise und im Ausführungsbeispiel höherschmelzende, Kunststoffkomponente der Endlosfilamente der (ersten) unteren Crimp-Spinnvlieslage bildet bevorzugt und im Ausführungsbeispiel die Kernkomponente und besteht zweckmäßigerweise im Wesentlichen aus einem Homo-Polypropylen (Exxon PP3155E5), das bevorzugt und im Ausführungsbeispiel durch Ziegler-Natta-Katalyse polymerisiert wurde.

Die Endlosfilamente der Armierungs-Spinnvlieslage, die zweckmäßigerweise und im Ausführungsbeispiel eine Mittellage des dreilagigen Spinnvlieslaminates bildet, sind bevorzugt und im Ausführungsbeispiel Monokomponentenfilamente. Diese Monokomponentenfilamente bestehen vorzugsweise und im Ausführungsbeispiel im Wesentlichen aus einer Bindekomponente bzw. aus einem ersten Kunststoff und bei diesem ersten Kunststoff handelt es sich zweckmäßigerweise und im Ausführungsbeispiel um ein Homo-Polypropylen, das durch Metallocen-Katalyse polymerisiert wurde (Atofina MR2001). Die Monokomponentenfilamente sind nicht-kräuselnd.

Für die obere zweite Crimp-Spinnvlieslage gelten vorzugsweise und im Ausführungsbeispiel dieselben Daten wie für die oben stehend beschriebene erste untere Crimp-Spinnvlieslage. Bei dem resultierenden dreilagigen Laminat ergibt sich eine Schmelztemperaturdifferenz zwischen der Bindekomponente der Endlosfilamente der Armierungs-Spinnvlieslage und der ersten, vorzugsweise und im Ausführungsbeispiel niedrigschmelzenden, Kunststoffkomponente der Endlosfilamente der Crimp-Spinnvlieslagen von weniger als 3 °C, wobei zweckmäßigerweise die Bindekomponente der Endlosfilamente der Armierungs-Spinnvlieslage eine höhere Schmelztemperatur aufweist als die erste Kunststoffkomponente der Endlosfilamente der Crimp-Spinnvlieslagen. Das resultierende Spinnvlieslaminat weist darüber hinaus zweckmäßigerweise und im Ausführungsbeispiel einen Cantilever in MD-Richtung von 41 mm auf. Für das Spinnvlieslaminat ergibt sich vorzugsweise und im Ausführungsbeispiel in Maschinenrichtung (MD) eine Zugkraft von 6,4 N/5 cm bei 5 % Dehnung und von 10,0 N/5 cm bei 10 % Dehnung.

Nachfolgend wird die Erfindung anhand einer lediglich ein Ausführungsbeispiel darstellenden Zeichnung näher erläutert. Es zeigen in schematischer Darstellung:
- Fig. 1: ein erfindungsgemäßes Spinnvlieslaminat und eine Vorrichtung zur Herstellung eines erfindungsgemäßen Spinnvlieslaminates in einer Seitenansicht,
- Fig. 2: einen Vertikalschnitt durch einen Teil der Vorrichtung gemäß Fig. 1,
- Fig. 3: ein erfindungsgemäßes Spinnvlieslaminat in der Draufsicht,
- Fig. 4: einen Querschnitt entlang A-A gemäß Fig. 3.

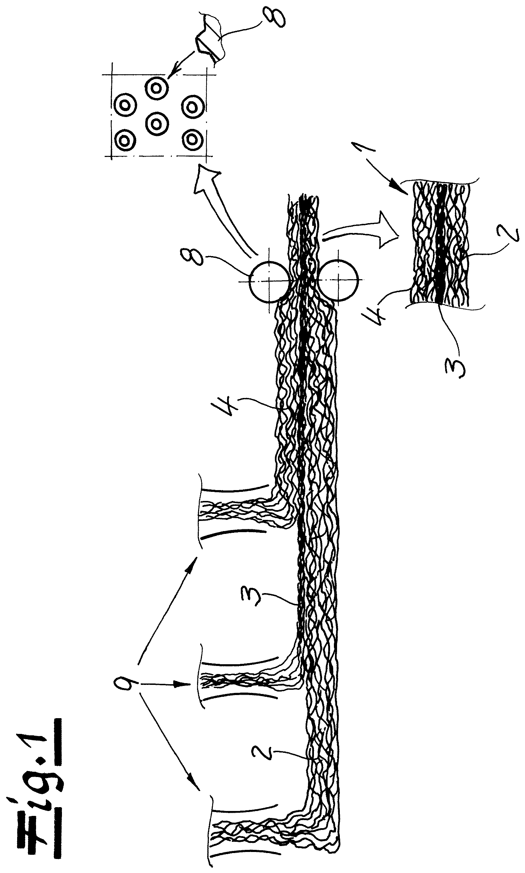

Mit der in Fig. 1 dargestellten Vorrichtung bzw. mit dem erfindungsgemäßen Verfahren ist vorzugsweise und im Ausführungsbeispiel ein Spinnvlieslaminat 1 mit zumindest drei Spinnvlieslagen 2, 3, 4 aus Endlosfilamenten herstellbar. Vorzugsweise und im Ausführungsbeispiel besteht das Spinnvlieslaminat 1 lediglich aus drei Spinnvlieslagen 2, 3, 4 und dabei handelt es sich bevorzugt und im Ausführungsbeispiel um eine erste untere Crimp-Spinnvlieslage 2, um eine als Mittellage ausgebildete Armierungs-Spinnvlieslage 3 und um eine zweite obere Crimp-Spinnvlieslage 4. Die Endlosfilamente bestehen zweckmäßigerweise und im Ausführungsbeispiel aus thermoplastischem Kunststoff.

Vorzugsweise und im Ausführungsbeispiel gemäß Fig. 1 weist das Spinnvlieslaminat 1 eine erste untere Crimp-Spinnvlieslage 2 und eine zweite obere Crimp-Spinnvlieslage 4 auf, die jeweils aus gekräuselten Endlosfilamenten bestehen bzw. im Wesentlichen bestehen. Die gekräuselten Endlosfilamente der Crimp-Spinnvlieslagen 2, 4 mögen bevorzugt und im Ausführungsbeispiel eine exzentrische Kern-Mantel-Konfiguration aufweisen. Bevorzugt besteht bzw. besteht im Wesentlichen dabei der Kern aus einem Homo-Polypropylen und der Mantel besteht bzw. besteht im Wesentlichen zweckmäßigerweise und im Ausführungsbeispiel aus einem Polypropylen-Copolymer.

Das Spinnvlieslaminat 1 weist weiter bevorzugt und im Ausführungsbeispiel eine zwischen den beiden Crimp-Spinnvlieslagen 2, 4 angeordnete Armierungs-Spinnvlieslage 3 auf. Die Armierungs-Spinnvlieslage 3 besteht vorzugsweise aus nicht-gekräuselten Endlosfilamenten und zweckmäßigerweise und im Ausführungsbeispiel weisen die nicht-gekräuselten Endlosfilamente der Armierungs-Spinnvlieslage 3 eine zentrische bzw. symmetrische Kern-Mantel-Konfiguration auf, wobei der Mantel der Endlosfilamente der Armierungs-Spinnvlieslage 3 von einer Bindekomponente gebildet wird, die aus einem ersten Kunststoff besteht bzw. im Wesentlichen besteht und bei diesem Kunststoff handelt es sich zweckmäßigerweise und im Ausführungsbeispiel um ein Polypropylen-Copolymer und ganz besonders bevorzugt um das gleiche Polypropylen-Copolymer, das die Mantelkomponente der Endlosfilamente der Crimp-Spinnvlieslagen 2, 4 bildet. Die Kernkomponente der Endlosfilamente der Armierungs-Spinnvlieslage 3 besteht bzw. besteht im Wesentlichen vorzugsweise und im Ausführungsbeispiel aus einem Homo-Polypropylen, das durch Metallocen-Katalyse polymerisiert wurde.

Zur Herstellung des Spinnvlieslaminates 1 werden bevorzugt und im Ausführungsbeispiel zunächst die Endlosfilamente der ersten unteren Crimp-Spinnvlieslage 2 erzeugt und - auf einer in der Fig. 1 nicht näher dargestellten Ablageeinrichtung - abgelegt und gegebenenfalls kompaktiert bzw. vorverfestigt. Anschließend werden vorzugsweise die nicht-kräuselnden Endlosfilamente der Armierungs-Spinnvlieslage 3 erzeugt und vorzugsweise und im Ausführungsbeispiel auf der ersten unteren Crimp-Spinnvlieslage 2 abgelegt und gegebenenfalls kompaktiert bzw. vorverfestigt. Darauffolgend werden bevorzugt die kräuselnden Endlosfilamente der zweiten oberen Crimp-Spinnvlieslage 4 erzeugt und vorzugsweise und im Ausführungsbeispiel oberhalb der Armierungs-Spinnvlieslage 3 abgelegt und gegebenenfalls kompaktiert bzw. vorverfestigt. Die einzelnen Vorrichtungen zur Kompaktierung bzw. Vorverfestigung sind in der Fig. 1 nicht näher dargestellt.

Das Aggregat aus den beiden Crimp-Spinnvlieslagen 2, 4 und der Armierungs-Spinnvlieslage 3 wird im Anschluss mithilfe eines Kalanders mit zumindest einer Kalanderwalze 8, vorzugsweise und im Ausführungsbeispiel mit einem Kalanderwalzenpaar endverfestigt. Es liegt im Rahmen der Erfindung, dass mit der Kalanderwalze 8 das vorzugsweise vorgesehene Prägemuster 5 aus einer Vielzahl von Prägungen 6 in das Laminat 1 eingebracht wird. Das wird weiter unten noch näher erläutert. Die zweite Kalanderwalze ist bevorzugt glatt bzw. mit glatter Oberfläche ausgebildet.

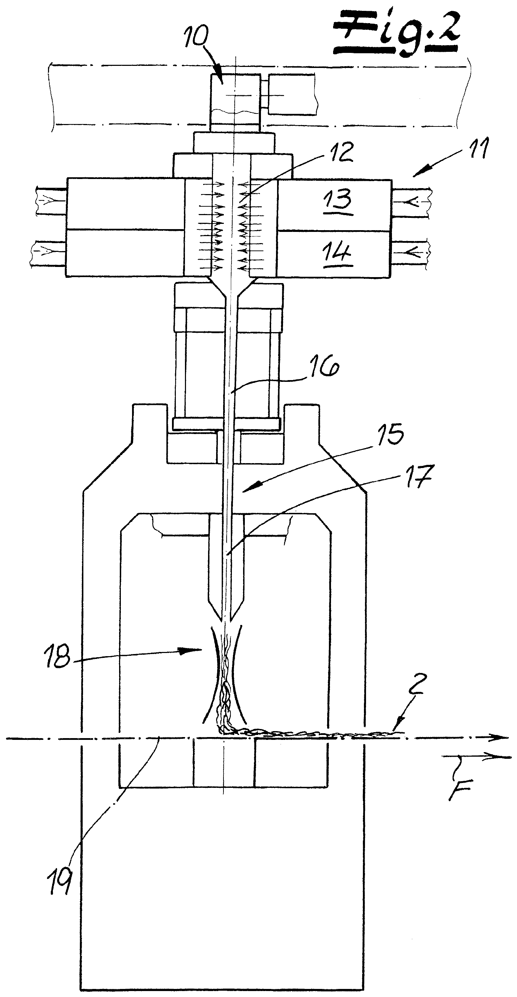

In der Fig. 1 sind im Übrigen drei Vorrichtungen 9 zur Erzeugung einer Spinnvlieslage schematisch angedeutet und es handelt sich somit gleichsam um eine Dreibalkenanlage mit drei Spinnbalken. Die Fig. 2 zeigt den grundsätzlichen Aufbau einer Vorrichtung 9 zur Erzeugung einer Spinnvlieslage, beispielsweise einer Crimp-Spinnvlieslage 2 nach dem Spunbond-Verfahren umfassend eine Spinnerette bzw. den Spinnbalken 10 zum Erspinnen der Endlosfilamente für die Spunbond-Spinnvlieslage. Die von der Spinnerette bzw. dem Spinnbalken 10 ersponnenen Endlosfilamente werden in eine Kühlvorrichtung 11 mit einer Kühlkammer 12 eingeführt. Vorzugsweise und im Ausführungsbeispiel sind an zwei gegenüberliegenden Seiten der Kühlkammer 12 übereinander angeordnete Luftzufuhrkabinen 13, 14 angeordnet. Aus den übereinander angeordneten Luftzufuhrkabinen 13, 14 wird bevorzugt Luft unterschiedlicher Temperatur in die Kühlkammer 12 eingeführt.

Empfohlenermaßen und im Ausführungsbeispiel ist der Kühlvorrichtung 11 in Filamentströmungsrichtung eine Verstreckeinrichtung 15 zum Verstrecken der Endlosfilamente nachgeschaltet. Zweckmäßigerweise und im Ausführungsbeispiel weist die Verstreckeinrichtung 15 einen Zwischenkanal 16 auf, der die Kühlvorrichtung 11 mit einem Verstreckschacht 17 der Verstreckeinrichtung 15 verbindet. Bevorzugt und im Ausführungsbeispiel ist das Aggregat aus Kühlvorrichtung 11, dem Zwischenkanal 16 und dem Verstreckschacht 17 als geschlossenes Aggregat ausgebildet und außer der Zufuhr von Kühlluft in der Kühlvorrichtung 11 erfolgt keine weitere Luftzufuhr von außen in dieses Aggregat.

Zweckmäßigerweise und im Ausführungsbeispiel schließt in Filamentströmungsrichtung an die Verstreckeinrichtung 15 ein Diffusor 18 an, durch den die Endlosfilamente geführt werden. Nach Durchlaufen des Diffusors 18 werden die Endlosfilamente vorzugsweise und im Ausführungsbeispiel auf einer als Ablagesiebband 19 ausgebildeten Ablageeinrichtung abgelegt. Das Ablagesiebband 19 ist bevorzugt und im Ausführungsbeispiel als endlos umlaufendes Ablagesiebband 19 ausgeführt. Es liegt im Rahmen der Erfindung, dass das Ablagesiebband 19 luftdurchlässig ist, sodass eine Absaugung von Prozessluft von unten durch das Ablagesiebband möglich ist. In der Fig. 2 ist auch die Förderrichtung F der Spinnvlieslage 2 bzw. des Laminates und des Ablagesiebbandes 19 und somit die Maschinenrichtung (MD) dargestellt.

Die Figuren 3 und 4 zeigen ein erfindungsgemäßes Laminat 1 mit den Spinnvlieslagen 2, 3 und 4. Das Laminat 1 weist vorzugsweise und im Ausführungsbeispiel ein Prägemuster 5 aus einer Vielzahl von nicht miteinander verbundenen Prägungen 6 auf. Prägung 6 meint dabei insbesondere eine verdichtete Stelle des Laminates 1, an der das Laminat 1 im Vergleich zu den nicht-geprägten Bereichen eine geringere Dicke aufweist und an der die Endlosfilamente des Laminates 1 vorzugsweise durch Einwirkung von Druck und/oder Temperatur zumindest teilweise miteinander verbunden bzw. verschmolzen sind. Das Prägemuster 5 ist bevorzugt und im Ausführungsbeispiel ein regelmäßiges Prägemuster 5, dessen einzelne Prägungen 6 vorzugsweise und im Ausführungsbeispiel in regelmäßigen Abständen auf dem Laminat 1 bzw. auf dem Vliesstoff verteilt angeordnet sind.

Zweckmäßigerweise und im Ausführungsbeispiel weisen die Prägungen 6 jeweils eine Prägefläche 7 von 0,05 bis 0,3 mm² auf. Prägefläche 7 einer Prägung 6 meint im Rahmen der Erfindung und im Ausführungsbeispiel insbesondere die geprägte Fläche einer Prägung 6, wobei bei der Bestimmung der Größe der Prägefläche 7 der sich gegebenenfalls im Zuge des Press- bzw. Prägevorganges bildende und die Prägung 6 zumindest teilweise umschließende Materialüberstand bzw. Materialwulst nicht Teil der Prägefläche 7 einer Prägung 6 ist. Das ist insbesondere in der Fig. 4 in schraffierter Darstellung zu erkennen. Weiter bevorzugt und im Ausführungsbeispiel ist die Prägefläche 7 der einzelnen Prägungen 6 des Prägemusters 5 gleich groß bzw. im Wesentlichen gleich groß. Vorzugsweise und im Ausführungsbeispiel weisen die Prägeflächen 7 der Prägungen 6 in der Draufsicht eine punktförmige bzw. kreisförmige Geometrie auf.

Im Rahmen der Erfindung beträgt der kleinste Abstand d zweier Prägungen 6 des Prägemusters 5 jeweils 0,6 bis 2,5 mm. Kleinster Abstand d zweier Prägungen 6 meint dabei insbesondere den kleinsten Abstand d zweier unmittelbar benachbarter Prägungen 6 des Prägemusters 5, also bevorzugt den kleinsten Abstand d einer Prägung 6 zu der ihr nächstgelegenen Prägung 6 des Prägemusters 5. Darüber hinaus bezieht sich der kleinste Abstand d zweier Prägungen 6 insbesondere auf den kleinsten Abstand d zwischen den Prägungsbegrenzungen zweier Prägungen 6, also auf den kleinsten Abstand der beiden Prägungen 6 entlang der dazwischenliegenden nicht-geprägten Fläche des Spinnvlieslaminates 1 bzw. des Vliesstoffes (Fig. 3).

Zweckmäßigerweise beträgt die Dicke h des Spinnvlieslaminates 1 0,15 bis 0,75 mm. Im Ausführungsbeispiel gemäß den Figuren mag die Dicke h des Laminates 1 etwa 0,3 mm betragen. Dicke h meint dabei die größte Dicke bzw. Gesamtdicke des Spinnvlieslaminates 1 quer, insbesondere senkrecht bzw. im Wesentlichen senkrecht zu seiner flächigen Erstreckung in den nicht-geprägten Bereichen des Laminates 1. Das ist insbesondere in der Fig. 4 zu erkennen. Die Dicke h bezieht sich im Rahmen der Erfindung insbesondere auf das fertige, gegebenenfalls vorverfestigte und/oder endverfestigte, Laminat 1.

## Patentansprüche

1. Spinnvlieslaminat (1) mit zumindest zwei Spinnvlieslagen (2, 3) aus Endlosfilamenten, wobei zumindest eine Crimp-Spinnvlieslage (2) vorhanden ist, die gekräuselte Endlosfilamente aufweist, insbesondere aus gekräuselten Endlosfilamenten besteht bzw. im Wesentlichen besteht, wobei die gekräuselten Endlosfilamente der zumindest einen Crimp-Spinnvlieslage (2) Mehrkomponentenfilamente, insbesondere Bikomponentenfilamente, sind, die zumindest eine erste, vorzugsweise niedrigschmelzende, Kunststoffkomponente und zumindest eine zweite, vorzugsweise höherschmelzende, Kunststoffkomponente aufweisen,
wobei zumindest eine Armierungs-Spinnvlieslage (3) vorhanden ist, die aus nicht-gekräuselten Endlosfilamenten und/oder aus im Vergleich zu den Endlosfilamenten der zumindest einen Crimp-Spinnvlieslage (2) weniger gekräuselten Endlosfilamenten besteht bzw. im Wesentlichen besteht, wobei die Endlosfilamente der Armierungs-Spinnvlieslage (3) zumindest eine an ihrer Oberfläche angeordnete Bindekomponente aufweisen,
wobei die Schmelztemperaturdifferenz zwischen der Bindekomponente der Endlosfilamente der Armierungs-Spinnvlieslage (3) und der ersten, vorzugsweise niedrigschmelzenden, Kunststoffkomponente der Endlosfilamente der zumindest einen Crimp-Spinnvlieslage (2) weniger als 15 °C, vorzugsweise weniger als 12 °C, bevorzugt weniger als 8 °C, besonders bevorzugt weniger als 5 °C, sehr bevorzugt weniger als 3 °C, ganz besonders bevorzugt weniger als 2°C, beispielsweise 0 °C bzw. etwa 0° C, beträgt,
wobei das Laminat (1) eine maximale Biegesteifigkeit mit einem Cantilever von maximal 100 mm, vorzugsweise von maximal 90 mm, bevorzugt von maximal 80 mm, besonders bevorzugt von maximal 75 mm und ganz besonders bevorzugt von maximal 70 mm, ermittelt nach der Methode "WSP 90.1(05) Standard Test Method for Stiffness of Nonwoven: Fabrics Using the Cantilever Test" aufweist,
wobei das Verhältnis der Zugfestigkeit des Laminates (1) in Maschinenrichtung (MD) zur Zugfestigkeit des Laminates (1) quer zur Maschinenrichtung (CD) 1,1 bis 2,3 beträgt,
wobei die Schmelztemperatur der Bindekomponente der Endlosfilamente der Armierungs-Spinnvlieslage (3) niedriger ist als die Schmelztemperatur der zweiten, vorzugsweise höherschmelzenden, Kunststoffkomponente der Endlosfilamente der zumindest einen Crimp-Spinnvlieslage (2),
wobei zumindest eine zweite Crimp-Spinnvlieslage (4) vorhanden ist und wobei die zumindest eine Armierungs-Spinnvlieslage (3) zwischen den zumindest zwei Crimp-Spinnvlieslagen (2, 4) angeordnet ist.

2. Spinnvlieslaminat nach Anspruch 1, wobei das Laminat (1) eine maximale Biegesteifigkeit mit einem Cantilever von maximal 65 mm, bevorzugt von maximal 55 mm, besonders bevorzugt von maximal 50 mm, ganz besonders bevorzugt von maximal 45 mm, ermittelt nach der Methode "WSP 90.1(05) Standard Test Method for Stiffness of Nonwoven: Fabrics Using the Cantilever Test", aufweist.

3. Spinnvlieslaminat nach einem der Ansprüche 1 oder 2, wobei die Endlosfilamente der zumindest einen Armierungs-Spinnvlieslage (3) Monokomponentenfilamente sind, die aus der Bindekomponente bestehen bzw. im Wesentlichen bestehen.

4. Spinnvlieslaminat nach einem der Ansprüche 1 oder 2, wobei die Endlosfilamente der zumindest einen Armierungs-Spinnvlieslage (3) Mehrkomponentenfilamente, insbesondere Bikomponentenfilamente, bevorzugt Mehrkomponentenfilamente bzw. Bikomponentenfilamente mit Kern-Mantel-Konfiguration, besonders bevorzugt Mehrkomponentenfilamente bzw. Bikomponentenfilamente mit zentrischer bzw. symmetrischer Kern-Mantel-Konfiguration und/oder mit exzentrischer Kern-Mantel-Konfiguration, sind, und wobei ganz besonders bevorzugt die zumindest eine Bindekomponente der Endlosfilamente der Armierungs-Spinnvlieslage (3) die Mantelkomponente der Endlosfilamente mit Kern-Mantel-Konfiguration bildet.

5. Spinnvlieslaminat nach Anspruch 4, wobei das Massenverhältnis Kern zu Mantel der Endlosfilamente der Armierungs-Spinnvlieslage (3) mit Kern-Mantel-Konfiguration 50:50 bis 95:5, vorzugsweise 55:45 bis 85:15, bevorzugt 60:40 bis 80:20 beträgt.

6. Spinnvlieslaminat nach einem der Ansprüche 1 bis 5, wobei die Schmelztemperaturdifferenz zwischen der zweiten, vorzugsweise höherschmelzenden, Kunststoffkomponente der Endlosfilamente der zumindest einen Crimp-Spinnvlieslage (2) und der Bindekomponente der Endlosfilamente der zumindest einen Armierungs-Spinnvlieslage (3) vorzugsweise zumindest 2 °C, bevorzugt zumindest 5 °C, besonders bevorzugt zumindest 7 °C beträgt.

7. Spinnvlieslaminat nach einem der Ansprüche 1 bis 6, wobei die Endlosfilamente der zumindest einen Armierungs-Spinnvlieslage (3) stärker in Maschinenrichtung (MD) orientiert sind als die Endlosfilamente der zumindest einen Crimp-Spinnvlieslage (2).

8. Spinnvlieslaminat nach einem der Ansprüche 1 bis 7, wobei der Titer der Endlosfilamente der zumindest einen Armierungs-Spinnvlieslage (3) weniger als 2,5 den, insbesondere weniger als 1,7 den, vorzugsweise weniger als 1,5 den, bevorzugt 1,0 den bis 1,4 den, besonders bevorzugt 1,2 den bis 1,4 den beträgt und/oder wobei der Titer der Endlosfilamente der zumindest einen Crimp-Spinnvlieslage (2) weniger als 3,0 den, vorzugsweise weniger als 2,0 den, bevorzugt weniger als 1,7 den, besonders bevorzugt 1,0 den bis 1,6 den, ganz besonders bevorzugt 1,2 den bis 1,4 den beträgt.

9. Spinnvlieslaminat nach einem der Ansprüche 1 bis 8, wobei die zumindest eine Bindekomponente der Endlosfilamente der Armierungs-Spinnvlieslage (3) einen ersten Kunststoff aufweist, insbesondere aus einem ersten Kunststoff besteht bzw. im Wesentlichen besteht, wobei der erste Kunststoff vorzugsweise ein Homo-Polyolefin - insbesondere ein Homo-Polypropylen und/oder ein Homo-Polyethylen - und/oder ein Polyolefin-Copolymer - insbesondere ein Polypropylen-Copolymer und/oder ein Polyethylen-Copolymer - ist.

10. Spinnvlieslaminat nach einem der Ansprüche 1 bis 9, wobei die zumindest eine Bindekomponente der Armierungs-Spinnvlieslage (3) aus einer Mischung bzw. einem Blend aus zumindest einem ersten Kunststoff und zumindest einem zweiten Kunststoff besteht bzw. im Wesentlichen besteht und wobei bevorzugt der erste Kunststoff und/oder der zweite Kunststoff ein Homo-Polyolefin - insbesondere ein Homo-Polypropylen und/oder ein Homo-Polyethylen - und/oder ein Polyolefin-Copolymer - insbesondere ein Polypropylen-Copolymer und/oder ein Polyethylen-Copolymer - ist.

11. Spinnvlieslaminat nach einem der Ansprüche 1 bis 10, wobei die erste, vorzugsweise niedrigschmelzende, und/oder die zweite, vorzugsweise höherschmelzende, Kunststoffkomponente der Endlosfilamente der zumindest einen Crimp-Spinnvlieslage (2) zumindest ein Homo-Polyolefin - insbesondere zumindest ein Homo-Polypropylen und/oder zumindest ein Homo-Polyethylen - und/oder zumindest ein Polyolefin-Copolymer - insbesondere zumindest ein Polypropylen-Copolymer und/oder zumindest ein Polyethylen-Copolymer - ist.

12. Spinnvlieslaminat nach einem der Ansprüche 1 bis 11, wobei die Bindekomponente der Endlosfilamente der Armierungs-Spinnvlieslage (3) und/oder die erste, vorzugsweise niedrigschmelzende, Kunststoffkomponente der Endlosfilamente der zumindest einen Crimp-Spinnvlieslage (2) und/oder die zweite, vorzugsweise höherschmelzende, Kunststoffkomponente der Endlosfilamente der zumindest einen Crimp-Spinnvlieslage (2) jeweils auf Basis eines Polyolefins aus der gleichen Polyolefin-Stoffgruppe, insbesondere auf Basis von Polypropylenen, ausgebildet sind.

13. Spinnvlieslaminat nach einem der Ansprüche 1 bis 12, wobei die Endlosfilamente der zumindest einen Crimp-Spinnvlieslage (2) Mehrkomponentenfilamente, insbesondere Bikomponentenfilamente, mit Seite-an-Seite-Konfiguration und/oder mit Kern-Mantel-Konfiguration, vorzugsweise mit exzentrischer Kern-Mantel-Konfiguration, sind und wobei bevorzugt im Falle einer Kern-Mantel-Konfiguration bzw. exzentrischen Kern-Mantel-Konfiguration die erste, vorzugsweise niedrigschmelzende, Kunststoffkomponente der Endlosfilamente der zumindest einen Crimp-Spinnvlieslage (2) die Mantelkomponente bildet.

14. Spinnvlieslaminat nach einem der Ansprüche 1 bis 13, wobei das Massenverhältnis der ersten, vorzugsweise niedrigschmelzenden, Kunststoffkomponente der Endlosfilamente der zumindest einen Crimp-Spinnvlieslage (2) zu der zweiten, vorzugsweise höherschmelzenden, Kunststoffkomponente der zumindest einen Crimp-Spinnvlieslage (2) 10:90 bis 60:40, vorzugsweise 25:75 bis 50:50, bevorzugt 30:70 bis 40:60 beträgt.

15. Spinnvlieslaminat nach einem der Ansprüche 1 bis 14, wobei das Verhältnis der Zugfestigkeit des Laminates (1) in Maschinenrichtung (MD) zur Zugfestigkeit des Laminates (1) quer zur Maschinenrichtung (CD) 1,2 bis 2,0, besonders bevorzugt 1,3 bis 1,9, beträgt.

16. Spinnvlieslaminat nach einem der Ansprüche 1 bis 15, wobei sich für das Laminat (1) in Maschinenrichtung (MD) eine Zugkraft von größer als 3,0 N/5 cm, vorzugsweise von größer als 4,0 N/5 cm, bevorzugt von größer als 4,5 N/5 cm bei 5 % Dehnung und/oder eine Zugkraft von größer als 5,0 N/5 cm, bevorzugt von größer als 6,0 N/5 cm, besonders bevorzugt von größer als 7,0 N/5 cm bei 10 % Dehnung ergibt.

17. Spinnvlieslaminat nach einem der Ansprüche 1 bis 16, wobei das Laminat (1) ein Prägemuster (5) aufweist, wobei das Prägemuster (5) aus einer Vielzahl von - vorzugsweise nicht miteinander verbundenen - Prägungen (6) besteht, wobei die Prägungen (6) jeweils eine Prägefläche (7) von 0,05 bis 0,3 mm², vorzugsweise von 0,06 bis 0,2 mm², bevorzugt von 0,07 bis 0,18 mm², besonders bevorzugt von 0,08 bis 0,15 mm² und ganz besonders bevorzugt von 0,09 bis 0,12 mm² aufweisen.

18. Spinnvlieslaminat nach einem der Ansprüche 1 bis 17, wobei der Anteil der Gesamtprägefläche des Prägemusters (5) an der Gesamtoberfläche des Laminates (1) 2 bis 12 %, vorzugsweise 2,5 bis 8 %, bevorzugt 3 bis 6 %, besonders bevorzugt 3,5 bis 5,5 % und ganz besonders bevorzugt 4 bis 5 % beträgt.

19. Spinnvlieslaminat nach einem der Ansprüche 1 bis 18, wobei der kleinste Abstand d zweier Prägungen (6) des Prägemusters (5) jeweils 0,6 bis 2,5 mm, vorzugsweise 0,8 bis 2,0 mm, bevorzugt 0,9 bis 1,8 mm, besonders bevorzugt 0,95 bis 1,6 mm und ganz besonders bevorzugt 1,0 bis 1,5 mm beträgt.

20. Spinnvlieslaminat nach einem der Ansprüche 1 bis 19, wobei das Laminat (1) eine Abriebfestigkeit von zumindest Klasse 2 nach Martindale, vorzugsweise von Klasse 1 nach Martindale, bestimmt nach der in der Beschreibung angegebenen Methode, aufweist.

21. Verfahren zur Herstellung eines Spinnvlieslaminates - insbesondere nach einem der Ansprüche 1 bis 20 -, mit zumindest zwei Spinnvlieslagen (2, 3) aus Endlosfilamenten, wobei kräuselnde Endlosfilamente erzeugt und zu zumindest einer Crimp-Spinnvlieslage (2) abgelegt werden, wobei die kräuselnden Endlosfilamente der Crimp-Spinnvlieslage (2) Mehrkomponentenfilamente, insbesondere Bikomponentenfilamente sind, die zumindest eine erste, vorzugsweise niedrigschmelzende, Kunststoffkomponente und zumindest eine zweite, vorzugsweise höherschmelzende, Kunststoffkomponente aufweisen,
wobei nicht-kräuselnde Endlosfilamente und/oder im Vergleich zu den Endlosfilamenten der zumindest einen Crimp-Spinnvlieslage (2) weniger kräuselnde Endlosfilamente erzeugt und zu zumindest einer Armierungs-Spinnvlieslage (3) abgelegt werden, insbesondere oberhalb der zumindest einen Crimp-Spinnvlieslage (2) abgelegt werden, wobei die Endlosfilamente der Armierungs-Spinnvlieslage (3) zumindest eine an ihrer Oberfläche angeordnete Bindekomponente aufweisen,
wobei die Schmelztemperaturdifferenz zwischen der Bindekomponente der Endlosfilamente der Armierungs-Spinnvlieslage (3) und der ersten, vorzugsweise niedrigschmelzenden, Kunststoffkomponente der Endlosfilamente der Crimp-Spinnvlieslage (2) weniger als 15 °C, vorzugsweise weniger als 12 °C, bevorzugt weniger als 8 °C, besonders bevorzugt weniger als 5 °C, sehr bevorzugt weniger als 3 °C, ganz besonders bevorzugt weniger als 2 °C, beispielsweise 0 °C bzw. etwa 0 °C, beträgt,
wobei das Laminat (1) eine maximale Biegesteifigkeit mit einem Cantilever von maximal 100 mm, vorzugsweise von maximal 90 mm, bevorzugt von maximal 80 mm, besonders bevorzugt von maximal 75 mm und ganz besonders bevorzugt von maximal 70 mm, ermittelt nach der Methode "WSP 90.1(05) Standard Test Method for Stiffness of Nonwoven: Fabrics Using the Cantilever Test", aufweist,
wobei das Verhältnis der Zugfestigkeit des Laminates (1) in Maschinenrichtung (MD) zur Zugfestigkeit des Laminates (1) quer zur Maschinenrichtung (CD) 1,1 bis 2,3 beträgt,
wobei die Schmelztemperatur der Bindekomponente der Endlosfilamente der Armierungs-Spinnvlieslage (3) niedriger ist als die Schmelztemperatur der zweiten, vorzugsweise höherschmelzenden, Kunststoffkomponente der Endlosfilamente der zumindest einen Crimp-Spinnvlieslage (2)
und wobei kräuselnde Endlosfilamente erzeugt und zu zumindest einer zweiten Crimp-Spinnvlieslage (4) oberhalb der zumindest einen Armierungs-Spinnvlieslage (3) abgelegt werden, sodass ein zumindest dreilagiges, insbesondere ein dreilagiges, Laminat (1) resultiert, bei dem die zumindest eine Armierungs-Spinnvlieslage (3) die Mittellage bildet.

22. Verfahren nach Anspruch 21, wobei das Laminat (1) mit zumindest einer Kalanderwalze (8) verfestigt bzw. endverfestigt wird und wobei mittels der zumindest einen Kalanderwalze (8) ein Prägemuster aus einer Vielzahl von Prägungen (6) in das Laminat (1) eingebracht wird, wobei die Prägungen (6) jeweils eine Prägefläche (7) von 0,05 bis 0,3 mm², vorzugsweise von 0,06 bis 0,2 mm², bevorzugt von 0,07 bis 0,18 mm², besonders bevorzugt von 0,08 bis 0,15 mm² und ganz besonders bevorzugt von 0,09 bis 0,12 mm² aufweisen.

## Claims

1. Spunbonded nonwoven laminate (1) comprising at least two spunbonded nonwoven layers (2, 3) made of continuous filaments, wherein at least one crimped spunbonded nonwoven layer (2) is present, which has crimped continuous filaments, in particular consists of or substantially consists of crimped continuous filaments, wherein the crimped continuous filaments of the at least one crimped spunbonded nonwoven layer (2) are multi-component filaments, in particular bicomponent filaments, which comprise at least one first, preferably low-melting, plastic component and at least one second, preferably higher-melting, plastic component,
wherein at least one reinforcing spunbonded nonwoven layer (3) is present which consists of or substantially consists of non-crimped continuous filaments and/or of continuous filaments which are less crimped compared to the continuous filaments of the at least one crimped spunbonded nonwoven layer (2), wherein the continuous filaments of the reinforcing spunbonded nonwoven layer (3) comprise at least one binder component arranged on their surface,
wherein the melting temperature difference between the binder component of the continuous filaments of the reinforcing spunbonded nonwoven layer (3) and the first, preferably low-melting, plastic component of the continuous filaments of the at least one crimped spunbonded nonwoven layer (2) is less than 15°C, preferably less than 12°C, preferably less than 8°C, particularly preferably less than 5°C, very preferably less than 3°C, quite particularly preferably less than 2°C, for example 0°C or about 0°C,
wherein the laminate (1) has a maximum flexural stiffness with a cantilever of at most 100 mm, preferably of at most 90 mm, preferably of at most 80 mm, particularly preferably of at most 75 mm and quite particularly preferably of at most 70 mm, determined according to the method "WSP 90.1(05) Standard Test Method for Stiffness of Nonwoven: Fabrics Using the Cantilever Test",
wherein the ratio of the tensile strength of the laminate (1) in the machine direction (MD) to the tensile strength of the laminate (1) transverse to the machine direction (CD) is 1.1 to 2.3,
wherein the melting temperature of the binder component of the continuous filaments of the reinforcing spunbonded nonwoven layer (3) is lower than the melting temperature of the second, preferably higher-melting, plastic component of the continuous filaments of the at least one crimped spunbonded nonwoven layer (2),
wherein at least one second crimped spunbonded nonwoven layer (4) is present and wherein the at least one reinforcing spunbonded nonwoven layer (3) is arranged between the at least two crimped spunbonded nonwoven layers (2, 4).

2. Spunbonded nonwoven laminate according to Claim 1, wherein the laminate (1) has a maximum flexural stiffness with a cantilever of at most 65 mm, preferably of at most 55 mm, particularly preferably of at most 50 mm, quite particularly preferably of at most 45 mm, determined according to the method "WSP 90.1(05) Standard Test Method for Stiffness of Nonwoven: Fabrics Using the Cantilever Test".

3. Spunbonded nonwoven laminate according to one of Claims 1 or 2, wherein the continuous filaments of the at least one reinforcing spunbonded nonwoven layer (3) are monocomponent filaments which consist of or substantially consist of the binder component.

4. Spunbonded nonwoven laminate according to one of Claims 1 or 2, wherein the continuous filaments of the at least one reinforcing spunbonded nonwoven layer (3) are multi-component filaments, in particular bicomponent filaments, preferably multi-component filaments or bicomponent filaments with core-sheath configuration, particularly preferably multi-component filaments or bicomponent filaments with centric or symmetrical core-sheath configuration and/or with eccentric core-sheath configuration, and wherein quite particularly preferably the at least one binder component of the continuous filaments of the reinforcing spunbonded nonwoven layer (3) forms the sheath component of the continuous filaments with core-sheath configuration.

5. Spunbonded nonwoven laminate according to Claim 4, wherein the core to sheath mass ratio of the continuous filaments of the reinforcing spunbonded nonwoven layer (3) with core-sheath configuration is 50:50 to 95:5, preferably 55:45 to 85:15, preferably 60:40 to 80:20.

6. Spunbonded nonwoven laminate according to one of Claims 1 to 5, wherein the melting temperature difference between the second, preferably higher-melting, plastic component of the continuous filaments of the at least one crimped spunbonded nonwoven layer (2) and the binder component of the continuous filaments of the at least one reinforcing spunbonded nonwoven layer (3) is preferably at least 2°C, preferably at least 5°C, particularly preferably at least 7°C.

7. Spunbonded nonwoven laminate according to one of Claims 1 to 6, wherein the continuous filaments of the at least one reinforcing spunbonded nonwoven layer (3) are more strongly oriented in the machine direction (MD) than the continuous filaments of the at least one crimped spunbonded nonwoven layer (2).

8. Spunbonded nonwoven laminate according to one of Claims 1 to 7, wherein the titre of the continuous filaments of the at least one reinforcing spunbonded nonwoven layer (3) is less than 2.5 den, in particular less than 1.7 den, preferably less than 1.5 den, preferably 1.0 den to 1.4 den, particularly preferably 1.2 den to 1.4 den and/or wherein the titre of the continuous filaments of the at least one crimped spunbonded nonwoven layer (2) is less than 3.0 den, preferably less than 2.0 den, preferably less than 1.7 den, particularly preferably 1.0 den to 1.6 den, quite particularly preferably 1.2 den to 1.4 den.

9. Spunbonded nonwoven laminate according to one of Claims 1 to 8, wherein the at least one binder component of the continuous filaments of the reinforcing spunbonded nonwoven layer (3) comprises a first plastic, in particular consists of or substantially consists of a first plastic, wherein the first plastic is preferably a homo-polyolefin - in particular a homo-polypropylene and/or a homo-polyethylene - and/or a polyolefin copolymer - in particular a polypropylene copolymer and/or a polyethylene copolymer.

10. Spunbonded nonwoven laminate according to one of Claims 1 to 9, wherein the at least one binder component of the reinforcing spunbonded nonwoven layer (3) consists of or substantially consists of a mixture or a blend of at least a first plastic and at least a second plastic, and wherein preferably the first plastic and/or the second plastic is a homo-polyolefin - in particular a homo-polypropylene and/or a homo-polyethylene - and/or a polyolefin copolymer - in particular a polypropylene copolymer and/or a polyethylene copolymer.

11. Spunbonded nonwoven laminate according to one of Claims 1 to 10, wherein the first, preferably low-melting, and/or the second, preferably higher-melting, plastic component of the continuous filaments of the at least one crimped spunbonded nonwoven layer (2) is at least one homo-polyolefin - in particular at least one homo-polypropylene and/or at least one homo-polyethylene - and/or at least one polyolefin copolymer - in particular at least one polypropylene copolymer and/or at least one polyethylene copolymer.

12. Spunbonded nonwoven laminate according to one of Claims 1 to 11, wherein the binder component of the continuous filaments of the reinforcing spunbonded nonwoven layer (3) and/or the first, preferably low-melting, plastic component of the continuous filaments of the at least one crimped spunbonded nonwoven layer (2) and/or the second, preferably higher-melting, plastic component of the continuous filaments of the at least one crimped spunbonded nonwoven layer (2) are each formed on the basis of a polyolefin from the same polyolefin material group, in particular on the basis of polypropylenes.

13. Spunbonded nonwoven laminate according to one of Claims 1 to 12, wherein the continuous filaments of the at least one crimped spunbonded nonwoven layer (2) are multi-component filaments, in particular bicomponent filaments, with side-by-side configuration and/or with core-sheath configuration, preferably with eccentric core-sheath configuration, and wherein preferably in the case of a core-sheath configuration or eccentric core-sheath configuration, the first, preferably low-melting, plastic component of the continuous filaments of the at least one crimped spunbonded nonwoven layer (2) forms the sheath component.

14. Spunbonded nonwoven laminate according to one of Claims 1 to 13, wherein the mass ratio of the first, preferably low-melting, plastic component of the continuous filaments of the at least one crimped spunbonded nonwoven layer (2) to the second, preferably higher-melting, plastic component of the at least one crimped spunbonded nonwoven layer (2) is 10:90 to 60:40, preferably 25:75 to 50:50, preferably 30:70 to 40:60.

15. Spunbonded nonwoven laminate according to one of Claims 1 to 14, wherein the ratio of the tensile strength of the laminate (1) in the machine direction (MD) to the tensile strength of the laminate (1) transverse to the machine direction (CD) is 1.2 to 2.0, particularly preferably 1.3 to 1.9.

16. Spunbonded nonwoven laminate according to one of Claims 1 to 15, wherein for the laminate (1) in the machine direction (MD) a tensile force of greater than 3.0 N/5 cm, preferably greater than 4.0 N/5 cm, more preferably greater than 4.5 N/5 cm at 5% elongation and/or a tensile force of greater than 5.0 N/5 cm, preferably greater than 6.0 N/5 cm, particularly preferably greater than 7.0 N/5 cm at 10% elongation is obtained.

17. Spunbonded nonwoven laminate according to one of Claims 1 to 16, wherein the laminate (1) has an embossing pattern (5), wherein the embossing pattern (5) consists of a plurality of - preferably not interconnected - embossments (6), wherein the embossments (6) each have an embossing area (7) of 0.05 to 0.3 mm², preferably of 0.06 to 0.2 mm², preferably of 0.07 to 0.18 mm², particularly preferably of 0.08 to 0.15 mm² and very particularly preferably of 0.09 to 0.12 mm².

18. Spunbonded nonwoven laminate according to one of Claims 1 to 17, wherein the proportion of the total embossing area of the embossing pattern (5) to the total surface area of the laminate (1) is 2 to 12%, preferably 2.5 to 8%, more preferably 3 to 6%, particularly preferably 3.5 to 5.5% and quite particularly preferably 4 to 5%.

19. Spunbonded nonwoven laminate according to one of Claims 1 to 18, wherein the smallest distance d between two embossments (6) of the embossing pattern (5) is in each case 0.6 to 2.5 mm, preferably 0.8 to 2.0 mm, more preferably 0.9 to 1.8 mm, particularly preferably 0.95 to 1.6 mm and quite particularly preferably 1.0 to 1.5 mm.

20. Spunbonded nonwoven laminate according to one of Claims 1 to 19, wherein the laminate (1) has an abrasion resistance of at least class 2 according to Martindale, preferably class 1 according to Martindale, determined according to the method described in the specification.

21. Method for producing a spunbonded nonwoven laminate - in particular according to one of Claims 1 to 20 - comprising at least two spunbonded nonwoven layers (2, 3) made of continuous filaments, wherein crimped continuous filaments are produced and laid down to form at least one crimped spunbonded nonwoven layer (2), wherein the crimped continuous filaments of the crimped spunbonded nonwoven layer (2) are multi-component filaments, in particular bicomponent filaments, which comprise at least one first, preferably low-melting, plastic component and at least one second, preferably higher-melting, plastic component,
wherein non-crimped continuous filaments and/or less crimped continuous filaments compared to the continuous filaments of the at least one crimped spunbonded nonwoven layer (2) are produced and laid down to form at least one reinforcing spunbonded nonwoven layer (3), in particular are laid down above the at least one crimped spunbonded nonwoven layer (2), wherein the continuous filaments of the reinforcing spunbonded nonwoven layer (3) have at least one binder component arranged on their surface,
wherein the melting temperature difference between the binder component of the continuous filaments of the reinforcing spunbonded nonwoven layer (3) and the first, preferably low-melting, plastic component of the continuous filaments of the crimped spunbonded nonwoven layer (2) is less than 15°C, preferably less than 12°C, preferably less than 8°C, particularly preferably less than 5°C, very preferably less than 3 °C, quite particularly preferably less than 2°C, for example 0°C or about 0°C,
wherein the laminate (1) has a maximum flexural stiffness with a cantilever of at most 100 mm, preferably of at most 90 mm, preferably of at most 80 mm, particularly preferably of at most 75 mm and quite particularly preferably of at most 70 mm, determined according to the method "WSP 90.1(05) Standard Test Method for Stiffness of Nonwoven: Fabrics Using the Cantilever Test",
wherein the ratio of the tensile strength of the laminate (1) in the machine direction (MD) to the tensile strength of the laminate (1) transverse to the machine direction (CD) is 1.1 to 2.3.
wherein the melting temperature of the binder component of the continuous filaments of the reinforcing spunbonded nonwoven layer (3) is lower than the melting temperature of the second, preferably higher-melting, plastic component of the continuous filaments of the at least one crimped spunbonded nonwoven layer (2),
and wherein crimped continuous filaments are produced and deposited above the at least one reinforcing spunbonded nonwoven layer (3) to form at least a second crimped spunbonded nonwoven layer (4), so that an at least three-layered, in particular a three-layered, laminate (1) results, in which the at least one reinforcing spunbonded nonwoven layer (3) forms the middle layer.

22. Method according to Claim 21, wherein the laminate (1) is consolidated or finally consolidated with at least one calender roller (8) and wherein an embossing pattern comprising a plurality of embossments (6) is introduced into the laminate (1) by means of the at least one calender roller (8), wherein the embossments (6) each have an embossing area (7) of 0.05 to 0.3 mm², preferably of 0.06 to 0.2 mm², preferably of 0.07 to 0.18 mm², particularly preferably of 0.08 to 0.15 mm² and quite particularly preferably of 0.09 to 0.12 mm².

## Revendications

1. Stratifié non-tissé filé-lié (1), comprenant au moins deux couches de non-tissé filé-lié (2, 3) en filaments continus, au moins une couche de non-tissé filé-lié (2) frisé étant présente, qui présente des filaments continus frisés, est constituée ou est essentiellement constituée notamment de filaments continus frisés, les filaments continus frisés de l'au moins une couche de non-tissé filé-lié (2) frisé étant des filaments multicomposants, notamment des filaments bicomposants, qui présentent au moins un premier composant plastique, de préférence à bas point de fusion et au moins un deuxième composant plastique, de préférence à point de fusion plus élevé,
au moins une couche de non-tissé filé-lié (3) d'armature étant présente, qui est constituée ou essentiellement constituée de filaments continus non frisés et / ou de filaments continus moins frisés, comparativement aux filaments continus de l'au moins couche de non-tissé filé-lié (2) frisé, les filaments continus de la couche de non-tissé filé-lié (3) d'armature présentant au moins composant de liaison, placé sur leur surface,
la différence de températures de fusion entre le composant de liaison des filaments continus de la couche de non-tissé filé-lié (3) d'armature et le premier composant plastique, de préférence à bas point de fusion des filaments continus de l'au moins une couche de non-tissé filé-lié (2) frisé étant inférieure à 15 °C, de préférence inférieure à 12 °C, de manière préférentielle, inférieure à 8 °C, de manière particulièrement préférentielle, inférieure à 5 °C de manière très préférentielle, inférieure à 3 °C, de manière tout particulièrement préférentielle, inférieure à 2 °C, étant par exemple de 0 °C ou d'approximativement 0° C,
le stratifié (1) faisant preuve d'une rigidité à la flexion maximale avec un porte-à-faux d'un maximum de 100 mm, de préférence d'un maximum de 90 mm, de manière préférentielle, d'un maximum de 80 mm, de manière particulièrement préférentielle, d'un maximum de maximum de 75 mm et de manière tout particulièrement préférentielle, d'un maximum de 70 mm, déterminée selon la méthode "WSP 90.1(05) Méthode d'essai normalisée pour la rigidité des non-tissés : tissus utilisant l'essai au porte-à-faux",
le rapport de la rigidité à la traction du stratifié (1) dans la direction de la machine (MD) à la rigidité à la traction du stratifié (1) à la transversale de la direction de la machine (CD) étant de 1,1 à 2,3,
la température de fusion du composant de liaison des filaments continus de la couche de non-tissé filé-lié (3) d'armature étant inférieure à la température de fusion du deuxième composant plastique, de préférence à point de fusion plus élevé des filaments continus de l'au moins une couche de non-tissé filé-lié (2) frisé,
au moins une deuxième couche de non-tissé filé-lié (4) frisé étant présente, l'au moins une couche de non-tissé filé-lié (3) d'armature étant placée entre les au moins deux couches de non-tissé filé-lié (2, 4) frisé.

2. Stratifié non-tissé filé-lié selon la revendication 1, le stratifié (1) faisant preuve d'une rigidité à la flexion maximale avec un porte-à-faux d'un maximum de 65 mm, de manière préférentielle, d'un maximum de 55 mm, de manière particulièrement préférentielle, d'un maximum de 50 mm, de manière tout particulièrement préférentielle, d'un maximum de 45 mm, déterminée selon la méthode "WSP 90.1(05) Méthode d'essai normalisée pour la rigidité des non-tissés : tissus utilisant l'essai au porte-à-faux".

3. Stratifié non-tissé filé-lié selon l'une quelconque des revendications 1 ou 2, les filaments continus de l'au moins une couche de non-tissé filé-lié (3) d'armature étant des filaments monocomposant, qui sont constitués ou essentiellement constitués du composant de liaison.

4. Stratifié non-tissé filé-lié selon l'une quelconque des revendications 1 ou 2, les filaments continus de l'au moins une couche de non-tissé filé-lié (3) d'armature étant des filaments multicomposants, notamment des filaments bicomposants, de manière préférentielle des filaments multicomposants ou des filaments bicomposants de configuration âme-gaine, de manière particulièrement préférentielle des filaments multicomposants ou des filaments bicomposants de configuration âme-gaine centrée ou symétrique et / ou de configuration âme-gaine excentrée et de manière tout particulièrement préférentielle, l'au moins un composant de liaison des filaments continus de la couche de non-tissé filé-lié (3) d'armature constituant le composant de la gaine des filaments continus de configuration âme-gaine.

5. Stratifié non-tissé filé-lié selon la revendication 4, le rapport en masse d'âme à gaine des filaments continus de la couche de non-tissé filé-lié (3) d'armature de configuration âme-gaine étant de 50 : 50 à 95 : 5, de préférence de 55 : 45 à 85 : 15, de manière préférentielle de 60 : 40 à 80 : 20.

6. Stratifié non-tissé filé-lié selon l'une quelconque des revendications 1 à 5, la différence de températures de fusion entre le deuxième composant plastique, de préférence à point de fusion plus élevé des filaments continus de l'au moins une couche de non-tissé filé-lié (2) frisé et le composant de liaison des filaments continus de l'au moins une couche de non-tissé filé-lié (3) d'armature étant de préférence d'au moins 2 °C, de manière préférentielle, d'au moins 5 °C, de manière particulièrement préférentielle, d'au moins 7 °C.

7. Stratifié non-tissé filé-lié selon l'une quelconque des revendications 1 à 6, les filaments continus de l'au moins une couche de non-tissé filé-lié (3) d'armature étant davantage orientés dans la direction de la machine (MD) que les filaments continus de l'au moins une couche de non-tissé filé-lié (2) frisé.

8. Stratifié non-tissé filé-lié selon l'une quelconque des revendications 1 à 7, le titre des filaments continus de l'au moins une couche de non-tissé filé-lié (3) d'armature étant inférieur à 2,5 deniers, notamment inférieur à 1,7 deniers, de préférence inférieur à 1,5 deniers, de manière préférentielle, de 1,0 denier à 1,4 deniers, de manière particulièrement préférentielle, de 1,2 deniers à 1,4 deniers et / ou le titre des filaments continus de l'au moins une couche de non-tissé filé-lié (2) frisé étant inférieur à 3,0 deniers, de préférence inférieur à 2,0 deniers, de manière préférentielle, inférieur à 1,7 deniers, de manière particulièrement préférentielle, de 1,0 deniers à 1,6 deniers, de manière tout particulièrement préférentielle, de 1,2 deniers à 1,4 deniers.

9. Stratifié non-tissé filé-lié selon l'une quelconque des revendications 1 à 8, l'au moins un composant de liaison des filaments continus de la couche de non-tissé filé-lié (3) d'armature présentant une première matière plastique, étant notamment constitué ou essentiellement constitué d'une première matière plastique, la première matière plastique étant de préférence une homopolyoléfine - notamment un homopolypropylène et / ou un homopolyéthylène - et / ou un copolymère de polyoléfine - notamment un copolymère de polypropylène et / ou un copolymère de polyéthylène -.

10. Stratifié non-tissé filé-lié selon l'une quelconque des revendications 1 à 9, l'au moins un composant de liaison de la couche de non-tissé filé-lié (3) d'armature étant constitué ou étant essentiellement constitué d'un mélange ou d'un alliage d'au moins une première matière plastique et d'au moins une deuxième matière plastique et de manière préférentielle, la première matière plastique et / ou la deuxième matière plastique étant de préférence une homopolyoléfine - notamment un homopolypropylène et / ou un homopolyéthylène - et / ou un copolymère de polyoléfine - notamment un copolymère de polypropylène et / ou un copolymère de polyéthylène -.

11. Stratifié non-tissé filé-lié selon l'une quelconque des revendications 1 à 10, le premier composant plastique, de préférence à bas point de fusion et / ou le deuxième composant plastique, de préférence à point de fusion plus élevé des filaments continus de l'au moins une couche de non-tissé filé-lié (2) frisé étant au moins une homopolyoléfine - notamment au moins un homopolypropylène et / ou au moins un homopolyéthylène - et / ou au moins un copolymère de polyoléfine - notamment au moins un copolymère de polypropylène et / ou au moins un copolymère de polyéthylène -.

12. Stratifié non-tissé filé-lié selon l'une quelconque des revendications 1 à 11, le composant de liaison des filaments continus de la couche de non-tissé filé-lié (3) d'armature et / ou le premier composant plastique, de préférence à bas point de fusion des filaments continus de l'au moins une couche de non-tissé filé-lié (2) frisé et / ou le deuxième composant plastique, de préférence à point de fusion plus élevé des filaments continus de l'au moins une couche de non-tissé filé-lié (2) frisé étant constitués respectivement sur la base d'une polyoléfine, issue du même groupe de substances polyoléfines, notamment sur la base de polypropylènes.

13. Stratifié non-tissé filé-lié selon l'une quelconque des revendications 1 à 12, les filaments continus de l'au moins une couche de non-tissé filé-lié (2) frisé étant des filaments multicomposants, notamment des filaments bicomposants de configuration côte à côte et / ou de configuration âme-gaine, de préférence de configuration âme-gaine excentrée et de manière préférentielle, dans le cas d'une configuration âme-gaine ou d'une configuration âme-gaine excentrée, le premier composant plastique, de préférence à bas point de fusion des filaments continus de l'au moins une couche de non-tissé filé-lié (2) frisé constituant le composant de la gaine.

14. Stratifié non-tissé filé-lié selon l'une quelconque des revendications 1 à 13, le rapport en masse du premier composant plastique, de préférence à bas point de fusion des filaments continus de l'au moins une couche de non-tissé filé-lié (2) frisé au deuxième composant plastique, de préférence à point de fusion plus élevé de l'au moins une couche de non-tissé filé-lié (2) frisé étant de 10 : 90 à 60 : 40, de préférence de 25 : 75 à 50 : 50, de manière préférentielle, de 30 : 70 à 40 : 60.

15. Stratifié non-tissé filé-lié selon l'une quelconque des revendications 1 à 14, le rapport de la rigidité à la traction du stratifié (1) dans la direction de la machine (MD) à la rigidité à la traction du stratifié (1) à la transversale de la direction de la machine (CD) étant de 1,2 à 2,0, de manière particulièrement préférentielle, de 1,3 à 1,9.

16. Stratifié non-tissé filé-lié selon l'une quelconque des revendications 1 à 15, étant exercée sur le stratifié (1) dans la direction de la machine (MD) une force de traction supérieure à 3,0 N/5 cm, de préférence supérieure 4,0 N/5 cm, de manière préférentielle, supérieure à 4,5 N/5 cm à 5 % d'allongement et / ou une force de traction supérieure à 5,0 N/5 cm, de manière préférentielle, supérieure à 6,0 N/5 cm, de manière particulièrement préférentielle, supérieure à 7,0 N/5 cm à 10 % d'allongement.

17. Stratifié non-tissé filé-lié selon l'une quelconque des revendications 1 à 16, le stratifié (1) présentant un motif de gaufrage (5), le motif de gaufrage (5) étant constitué d'une pluralité d'empreintes (6) (de préférence non reliées entre elles), les empreintes (6) présentant chacune une surface de gaufrage (7) de 0,05 à 0,3 mm², de préférence de 0,06 à 0,2 mm², de manière préférentielle, de 0,07 à 0,18 mm², de manière particulièrement préférentielle, de 0,08 à 0,15 mm² et de manière tout particulièrement préférentielle, de 0,09 à 0,12 mm².

18. Stratifié non-tissé filé-lié selon l'une quelconque des revendications 1 à 17, la proportion de la surface totale de gaufrage du motif de gaufrage (5) en rapport à la surface totale du stratifié (1) étant de 2 à 12 %, de préférence 2,5 à 8 %, de manière préférentielle, de 3 à 6 %, de manière particulièrement préférentielle, de 3,5 à 5,5 % et de manière tout particulièrement préférentielle, de 4 à 5 %.

19. Stratifié non-tissé filé-lié selon l'une quelconque des revendications 1 à 18, le plus petit écart d entre deux empreintes (6) du motif de gaufrage (5) étant respectivement de 0,6 à 2,5 mm, de préférence de 0,8 à 2,0 mm, de manière préférentielle, de 0,9 à 1,8 mm, de manière particulièrement préférentielle, de 0,95 à 1,6 mm et de manière tout particulièrement préférentielle, de 1,0 à 1,5 mm.

20. Stratifié non-tissé filé-lié selon l'une quelconque des revendications 1 à 19, le stratifié (1) faisant preuve d'une résistance à l'abrasion d'au moins la classe 2 selon Martindale, de préférence de la classe 1 selon Martindale, déterminée d'après la méthode mentionnée dans la description.

21. Procédé, destiné à fabriquer un stratifié non-tissé filé-lié - notamment selon l'une quelconque des revendications 1 à 20 -, comprenant au moins deux couches de non-tissé filé-lié (2, 3) en filaments continus, des filaments continus présentant des frisures étant produits et déposés en au moins une couche de non-tissé filé-lié (2) frisé, les filaments continus présentant des frisures de la couche de non-tissé filé-lié (2) frisé étant des filaments multicomposants, notamment des filaments bicomposants, qui présentent au moins un premier composant plastique, de préférence à bas point de fusion et au moins un deuxième composant plastique, de préférence à point de fusion plus élevé,
des filaments continus ne présentant pas de frisures et / ou des filaments continus présentant moins de frisures comparativement aux filaments continus de l'au moins une couche de non-tissé filé-lié (2) frisé étant produits et déposés en au moins une couche de non-tissé filé-lié (3) d'armature, notamment au-dessus de l'au moins une couche de non-tissé filé-lié (2) frisé, les filaments continus de la couche de non-tissé filé-lié (3) d'armature présentant au moins un composant de liaison placé sur leur surface,
la différence de températures de fusion entre le composant de liaison des filaments continus de la couche de non-tissé filé-lié (3) d'armature et le premier composant plastique, de préférence à bas point de fusion des filaments continus de la couche de non-tissé filé-lié (2) frisé étant inférieure à 15 °C, de préférence inférieure à 12 °C, de manière préférentielle, inférieure à 8 °C, de manière particulièrement préférentielle, inférieure à 5 °C, de manière très préférentielle, inférieure à 3 °C, de manière tout particulièrement préférentielle, inférieure à 2 °C, étant par exemple de 0 °C ou d'approximativement 0 °C,
le stratifié (1) faisant preuve d'une rigidité à la flexion maximale avec un porte-à-faux d'un maximum de 100 mm, de préférence d'un maximum de 90 mm, de manière préférentielle, d'un maximum de 80 mm, de manière particulièrement préférentielle, d'un maximum de 75 mm et de manière tout particulièrement préférentielle, d'un maximum de 70 mm, déterminée selon la méthode "WSP 90.1(05) Méthode d'essai normalisée pour la rigidité des non-tissés : tissus utilisant l'essai au porte-à-faux",
le rapport de la rigidité à la traction du stratifié (1) dans la direction de la machine (MD) à la rigidité à la traction du stratifié (1) à la transversale de la direction de la machine (CD) étant de 1,1 à 2,3,
la température de fusion du composant de liaison des filaments continus de la couche de non-tissé filé-lié (3) d'armature étant inférieure à la température de fusion du deuxième composant plastique, de préférence à point de fusion plus élevé des filaments continus de l'au moins une couche de non-tissé filé-lié (2) frisé,
et des filaments continus présentant des frisures étant produits et déposés en au moins une deuxième couche de non-tissé filé-lié (4) frisé au-dessus de l'au moins une couche de non-tissé filé-lié (3) d'armature, de sorte à donner naissance à un stratifié (1) au moins tricouches, notamment tricouches dans lequel l'au moins une couche de non-tissé filé-lié (3) d'armature constitue la couche centrale.

22. Procédé selon la revendication 21, le stratifié (1) étant soumis à une cons^{,} olidation ou à une consolidation finale à l'aide d'au moins rouleau calandreur (8) et au moyen de l'au moins un rouleau calandreur (8), un motif de gaufrage constitué d'une pluralité d'empreintes (6) étant ménagé dans le stratifié (1), les empreintes (6) présentant respectivement une surface de gaufrage (7) de 0,05 à 0,3 mm², de préférence de 0,06 à 0,2 mm², de manière préférentielle, de 0,07 à 0,18 mm² de manière particulièrement préférentielle, de 0,08 à 0,15 mm² et de manière tout particulièrement préférentielle, de 0,09 à 0,12 mm².
